# EUROPEAN PATENT SPECIFICATION

(11) **EP 2 823 660 B1**
(45) Date of publication and mention of the grant of the patent: **03.05.2017**
(21) Application number: 13714356.6
(22) Date of filing: 08.03.2013
(51) Int. Cl.: H04W 16/14

(54) **METHODS FOR HANDLING A PATTERN-BASED GUARD BANDS**
VERFAHREN ZUR HANDHABUNG MUSTERBASIERTER SCHUTZBEREICHE
PROCÉDÉS DE MANIPULATION DE BANDES DE GARDE BASÉES SUR LES STRUCTURES

(30) Priority: 09.03.2012 US 201261608890 P; 09.03.2012 US 201261608842 P
(43) Date of publication of application: 14.01.2015
(73) Proprietor: Telefonaktiebolaget LM Ericsson (publ), 164 83 Stockholm (SE)
(72) Inventor: SIOMINA, Iana, SE-170 66 Solna (SE); KAZMI, Muhammad, SE-16739 Bromma (SE)
(74) Representative: Ericsson
(86) International application number: PCT/SE2013/050210
(87) International publication number: WO 2013/133761

(56) References cited:
- EP-A1- 1 494 490
- WO-A2-2008/035171
- WO-A2-2011/061164
- US-B1- 7 151 795

## Description

### TECHNICAL FIELD

Embodiments herein relate to a first node and a second node and methods therein. In particular, embodiments herein relate to handling a pattern-based guard band.

### BACKGROUND

Communication devices such as wireless devices are also known as e.g. User Equipments (UE), mobile terminals, wireless terminals and/or mobile stations. Wireless devices are enabled to communicate wirelessly in a wireless communications system or wireless communication system, sometimes also referred to as a cellular radio system or cellular networks. The communication may be performed e.g. between two wireless devices, between a wireless device and a regular telephone and/or between a wireless device and a server via a Radio Access Network (RAN) and possibly one or more core networks, comprised within the wireless communications system.

Wireless devices may further be referred to as mobile telephones, cellular telephones, or laptops with wireless capability, just to mention some further examples. The wireless devices in the present context may be, for example, portable, pocket-storable, hand-held, computer-comprised, or vehicle-mounted mobile devices, enabled to communicate voice and/or data, via the RAN, with another entity, such as wireless device or a server.

The wireless communications system covers a geographical area which is divided into cell areas, wherein each cell area being served by a base station, e.g. a Radio Base Station (RBS), which sometimes may be referred to as e.g. "eNB", "eNodeB", "NodeB", "B node", or BTS (Base Transceiver Station), depending on the technology and terminology used. The base stations may be of different classes such as e.g. macro eNodeB, home eNodeB or pico base station, based on transmission power and thereby also cell size. A cell is the area of radio coverage provided by the base station at a base station site. One base station, situated on the base station site, may serve one or several cells. Further, each base station may support one or several communication technologies. The base stations communicate over the air interface operating on radio frequencies with the wireless devices within range of the base stations.

In some RANs, several base stations may be connected, e.g. by landlines or microwave, to a radio network controller, e.g. a Radio Network Controller (RNC) in Universal Mobile Telecommunications System (UMTS), and/or to each other. The radio network controller, also sometimes termed a Base Station Controller (BSC) e.g. in GSM, may supervise and coordinate various activities of the plural base stations connected thereto. GSM is an abbreviation for Global System for Mobile Communications (originally: Groupe Special Mobile).

In 3rd Generation Partnership Project (3GPP) Long Term Evolution (LTE), base stations, which may be referred to as eNodeBs or even eNBs, may be directly connected to one or more core networks.

UMTS is a third generation mobile communication system, which evolved from the GSM, and is intended to provide improved mobile communication services based on Wideband Code Division Multiple Access (WCDMA) access technology. UMTS Terrestrial Radio Access Network (UTRAN) is essentially a radio access network using wideband code division multiple access for wireless devices. The 3GPP has undertaken to evolve further the UTRAN and GSM based radio access network technologies.

According to 3GPP GSM EDGE Radio Access Network (GERAN), a wireless device has a multi-slot class, which determines the maximum transfer rate in the uplink and downlink direction. EDGE is an abbreviation for Enhanced Data rates for GSM Evolution. In the end of 4008 the first release, Release 8, of the 3GPP Long Term Evolution (LTE) standard was finalized and later releases have also been finalized.

In the context of this disclosure, the expression Downlink (DL) is used for the transmission path from the base station to the mobile station. The expression Uplink (UL) is used for the transmission path in the opposite direction i.e. from the mobile station to the base station.

In a wireless communications network, radio transmissions on one frequency create co-channel interference but may also cause interference or noise on another frequency, where the other frequency may be an adjacent or non-adjacent channel, in the same or other frequency band. Interference sources may be categorized as:
(1) Co-channel (interferer, a.k.a. aggressor, and victim use the same frequencies); and/or
(2) Inter-channel Interference (aggressor and victim use different frequencies), such as,
   Out-of-band emissions,
   Spurious emissions,
   Unwanted emissions,
   Adjacent channel interference & receiver selectivity,
   Spurious responses,
   Intermodulation, and/or
   Receiver blocking and receiver overload.

The term inter-channel interference reflects a series of potential interference issues that may occur throughout a communications system's service area on one channel due to radio communications activity on another channel. Inter-channel interference is a function of the performance of both transmitters and receivers.

Out-of-band emissions. Transmitter emissions that fall outside of the transmitter's intended channel bandwidth are known as out-of-band emissions (OOBE) or, equivalently, as sideband noise. This noise splatters into the adjacent channels and into other bands, generally decreasing in strength with the frequency offset from the transmitter frequency.

Spurious emissions. Emission on a frequency or frequencies which are outside the transmitter's intended channel bandwidth are known as spurious emissions, and the level of spurious emissions may be reduced without affecting the corresponding transmission of information.

Unwanted emissions. Unwanted emissions consist of spurious emissions and out-of-band emissions.

Adjacent channel interference and receiver selectivity. Desensitization, or ACS (Adjacent Channel Selectivity), is a measure of a receiver's ability to receive a wanted signal at its assigned channel frequency in the presence of an adjacent channel interfering signal at a given frequency offset from the centre frequency of the assigned channel, without the interfering signal causing a degradation of the receiver performance beyond a specified limit.

Adjacent Channel Leakage Ratio is a measure of the power which leaks into certain specific nearby Radio Frequency (RF) channels as a result of transmitting in a given channel. It provides an estimate of how much a neighboring radio receiver will be affected by the Out Of Band (OOB) emissions from a transmitter. It is defined as the ratio of the filtered mean power in a set bandwidth within the wanted channel to the filtered mean power in an adjacent channel.

Spurious responses. It is common for transmitters to have elevated power levels at a small number of discrete frequencies other than the intended transmitter frequency. Likewise, receivers exhibit somewhat elevated sensitivity at a small number of discrete frequencies outside the intended receive frequency bandwidth.

Intermodulation. Receiver intermodulation (IM) is the result of mixing two or more over-the-air signals within a radio's receiver circuitry such that the mix products fall within the Intermediate Frequency (IF) bandwidth of the receiver and add to its thermal noise floor, thus reducing the sensitivity of the receiver. IM is not due to the transmitter's spectrum output but to non-linearity within the receiver itself.

Receiver blocking. Describes a situation when the receiver front end can be overloaded by a single high level unwanted signal, residing outside of the desired channel, or multiple high level unwanted signals.

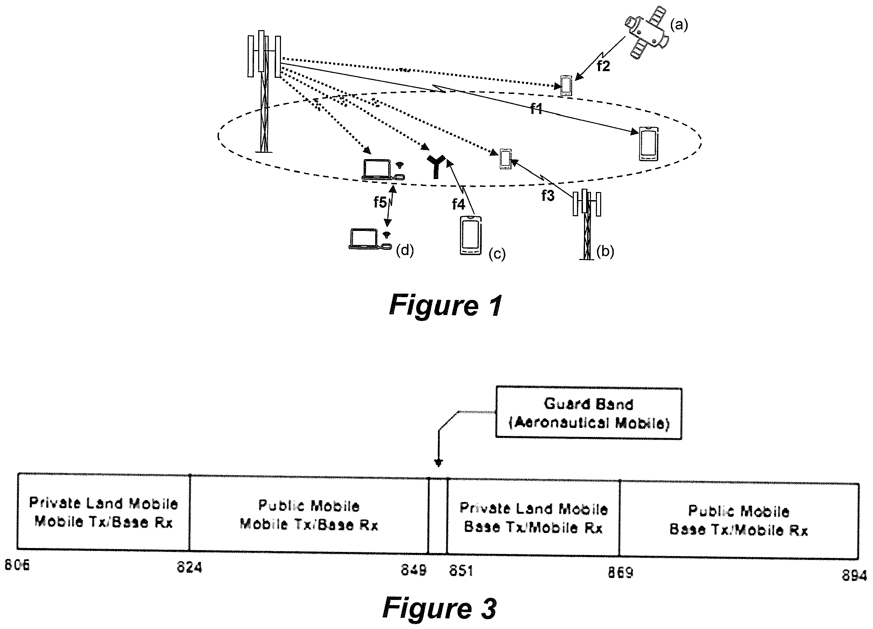

Transmit-receive scenarios are common interference scenarios, especially in unpaired spectrum, but also with paired spectrum with multiple systems in the same area. Some example interference scenarios caused by DL radio transmissions are illustrated in Figure 1. There are also interference scenarios cause by UL radio transmission or a combination of both DL and UL transmissions.

Figure 1 illustrates examples of scenarios of adjacent or other-channel interference from DL (downlink) transmissions on frequency f1: (a) to a device communicating with another system (e.g., a satellite) on frequency f2; (b) to a device receiving DL transmissions from a radio node on frequency f3; (c) to a radio node receiving UL (uplink) transmissions from a device on frequency f4, where the radio node may belong to own system (e.g., with FDD or frequency division duplex where DL and UL transmissions are on different frequencies) or other system; and (d) to a device communicating with another device using frequency f5.

The amount of inter-channel interference and the caused performance degradation of a victim system may be significant. Managing the inter-channel interference may thus be important for spectrum management, network planning, network deployment, and/or network operation tasks. To provide good/improved co-existence performance of multiple systems and control an amount of allowed emitted power and unwanted emissions as well as a receiver ACS capability, the 3GPP (3^{rd} Generation Partnership Project) standard specifies RF transmitter and receiver requirements, e.g., spectral masks, ACLR (Adjacent Channel Leakage Ratio), ACS, etc., which are defined for both user equipment and radio nodes.

### Radio Requirements

The UEs (i.e., user equipment nodes or wireless devices or terminals) and base stations may be required to fulfill a specified set of RF transmitter and RF receiver requirements to provide that the wireless devices limit interference and are able to handle a certain level of interference respectively.

More specifically, out of band (OOB) and spurious emission requirements are to be met as part of RF transmitter requirements. An objective of OOB and spurious emission requirements is to reduce/limit the interference caused by the transmitters (e.g., User Equipment (UE) and/or Base Station (BS) transmitters) outside their respective operating bandwidths to the adjacent carriers or bands. In fact, wireless communication standards such as GSM, UTRAN, Evolved UTRAN (E-UTRAN), Wireless Local Area Network (WLAN) etc., clearly specify the OOB and spurious emission requirements to reduce, limit, and/or minimize unwanted emissions. These requirements may be primarily approved and set by the national and international regulatory bodies, such as, ITU-R (International Telecommunications Union - Radiocommunications Sector), FCC (Federal Communications Commission), ARIB (Association of Radio Industries And Businesses), ETSI (European Telecommunications Standards Institute), etc.

Unwanted emission requirements, which may be specified by the standardization bodies and eventually enforced by the regulators in different countries and regions for both UE and the base stations may include:
(1) Adjacent Channel Leakage Ratio (ACLR);
(2) Spectrum Emission Mask (SEM);
(3) Spurious emissions; and/or
(4) In-band unwanted emissions.

Specific definitions and/or specified levels of these requirements may vary from one system to another. Typically, these requirements provide that emission levels outside an operating bandwidth or band in some cases remain several tens of decibels (dB)lower compared to the wanted signal in the operating bandwidth. Although OOB and spurious emission level tend to decay dramatically further away from an operating band, they may not be completely eliminated, at least in the adjacent carrier frequencies.

Significant RF receiver requirements, which are typically specified by the standards bodies and in some cases enforced by the regulators in different countries and regions for both UE and the base stations include:
(1) Receiver sensitivity;
(2) Adjacent Channel Selectively (ACS);
(3) In-channel selectivity;
(4) Spurious emissions; and/or
(5) Blocking: in-band, out-of-band, narrow-band, etc.

### Operating Bands in 3GPP

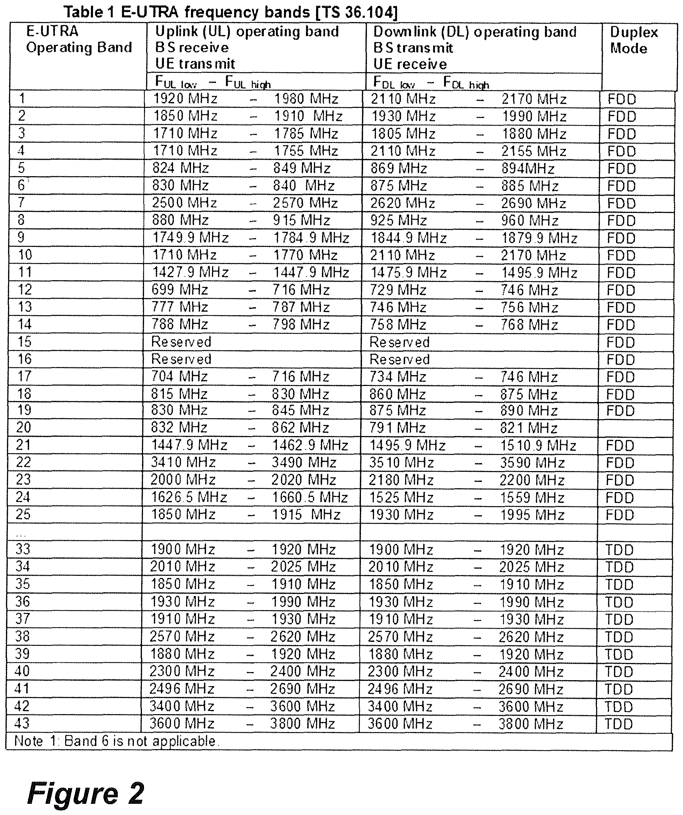

The currently specified operation bands for Evolved Universal Terrestrial Radio Access (E-UTRA) are shown in Table 1 of Figure 2. The embodiments described herein, however, are not limited to E-UTRA bands, 3GPP bands, or even licensed bands in general.

### Spectrum Management and Guard Bands

A significant step in the development of interference avoidance mechanisms is the creation of a spectrum database. It may also be important to supplement this allocation and assignment data with information regarding the actual use of the airwaves. Indeed, a more complete database may include additional information such as temporal duty cycles, and active and inactive time periods. The analysis of the inventory information along with any data on the actual use of spectrum may take into account the purpose for which a spectrum band in question has been originally allocated. For example, in some bands, it may be appropriate to look at average spectrum utilization over a given period of time or over a certain geographic area. For other bands, utilization could be based on peak usage levels, especially during times of emergency.

Configuring guard bands is one of the basic inter-channel interference, mainly adjacent channel interference, avoidance techniques. The part of the spectrum constituting a guard band is either unused or is partially used by the wireless device. The latter is also known as restricted operation or guard band comprising the restricted use of radio resources. More specifically the partial or limited use may mean, for example, that the transmitter is allowed to transmit at lower power level, e.g. up to 0 dBm in guard band, whereas up to 43 dBm may be transmitted in normal (non-guard band) portions of the spectrum.

A guard band is an allocation of spectrum used to separate adjacent transmit and receive bands within a given service or to separate bands of different services for the purpose of protecting operations within the separated bands from interference. Guard bands allow sideband noise and filter responses to roll off to acceptable levels before entering other bands. A guard band may be helpful, for example, to account for practical limits of filters used to prevent strong off-channel signals or emissions from entering receivers while enabling reducing out-of-channel signals or emissions to levels sufficient to protect the receiver. The guard band spectrum is typically designated for another type of service that, due to its particular use case, is neither significantly affected by interference from the adjacent bands nor significantly interferes with the adjacent bands.

Unused band, unused spectrum, restricted band, restricted spectrum, and/or restricted resource blocks are some of the alternate terminologies used to describe guard bands. All of these terms may have substantially the same meaning (i.e., part of unused spectrum or spectrum with limited use to reduce/prevent interference between 2 wireless systems.

### Formal Guard Band Allocation

Frequency coordination may be an effective method in which a guard space is used to separate systems sharing the same frequency spectrum or occupying adjacent frequency spectrum. Frequency coordination is usually thought of as a formal process by which a frequency and a coverage area are assigned to an applicant. Guard bands may then be statically decided by a regulatory body. The guard band may also be decided mutually by the individual parties operating their systems in adjacent bands or carriers. For example, operator A and operator B operating LTE (Long Term Evolution) TDD (Time Division Duplex) systems using adjacent carrier frequencies may decide to keep a guard band of 5 Mega Hertz (MHz). This can be realized, for example, using equal spectrum contribution from each operator (i.e., each operator may agree to set aside 2.5 MHz of unused spectrum). An example of a guard band is illustrated in Figure 3 for an 800 MHz land-mobile band and an associated guard band.

The statically assigned guard bands may not be efficient from a spectrum utilization point of view. Furthermore, they may or may not be sufficient, depending on the location of transmitters and receivers and the transmit power level. Additional means of dealing with the interference may thus be used as discussed below.

Duplex antenna combining. Duplexing is a way to reduce interference when an antenna is shared by a transmitter and a receiver. The technique includes combining, for example, a base station's transmitter antenna and receiver antenna into a single antenna) through a duplexer which attenuates the transmitter's signal and reduces/prevents entry of the transmitter's signal into the receiver to a practical extent.

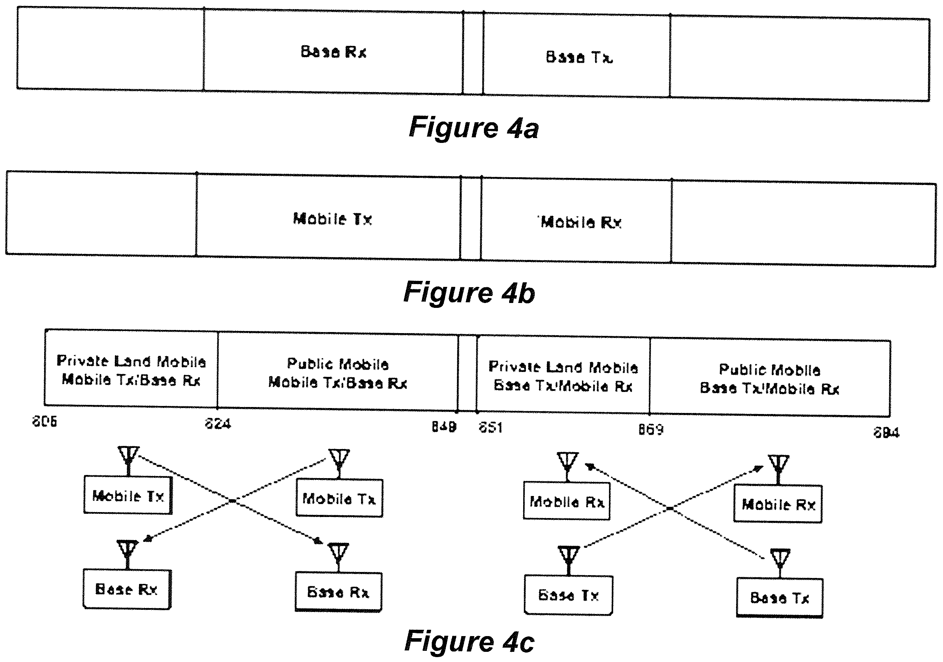

Physical separation of BS transmitter antenna(s) and BS receiver antenna(s) (see Figure 4a). As shown in Figure 4a, for example, a statically allocated 2 MHz guard band may be sufficient for non-collocated BS transmitters and receivers, but not for BS transmitters and receivers located at a same antenna tower.

Interference between mobile transmitter and mobile receiver (see Figure 4b). A guard band between UE (mobile) transmitter frequency spectrum and UE (mobile) receiver frequency spectrum may be less practical because a large guard band may be needed compared to the BS-to-BS case due to more relaxed requirements for mobiles and practical filter limitations.

Effective guard bands by geographical reuse for BS-to-mobile and mobile-to-BS scenarios. By exploiting geolocation of transmitters and receivers and by exploiting the fact that the inter-channel interference for BS-to-mobile and mobile-to-BS may typically be less significant (e.g. due to height difference or isolation), a true guard band may be omitted. For example, see Figure 4c.

In general, guard bands may be very effective at reducing effects of OOBE from narrowband systems because the OOBE of a narrowband transmitter may roll off significantly in a practical-sized guard band (e.g., approximately 1 MHz). Broadband signals, however, may have broader OOBE spectrums, and aggressive filtering may still be required to substantially reduce OOBE with a 1 MHz guard band, which may only be practical at base stations.

In some exceptions, a slightly higher performance degradation may be accepted as a worst case while allowing for a more dynamic guard band control. For example, to reduce/prevent OOBE from 500 MHz C Block LTE mobile transmitters from interfering with public safety mobiles in the 500 MHz public safety block, a special mode was created in the 3GPP standard that results in lower OOBE but also reduces throughput. The special mode is under the control of the cellular operator and is turned on through a downlink message on a cell-by-cell basis.

However, this may not just be a problem between LTE and narrowband public safety. Any mobile receivers operating in the 500 MHz spectrum may be affected by the OOBE because the 1 MHz guard band between the base and mobile transmit bands may be insufficient for significant attenuation of broadband signals. On the other hand, the 1 MHz guard band between Block C and the D/Public Safety Spectrum Trust (PSST) blocks may provide sufficient room for filters on the broadband base transmitters to attenuate the base-generated OOBE, reducing potential interference near base stations.

The operation of two unsynchronized TDD systems in adjacent carriers is another scenario where guard bands may be required. In TDD, UL and DL subframes operate on the same carrier. Without any guard band, cross UL and DL subframe interference may lead to severe performance degradation at the UE receiver (e.g., due to UE to UE interference) as well as at the BS receiver (e.g., due to BS to BS interference). This cross UL/DL subframe interference may even lead to complete disruption of the service, for example, if UEs on two carriers are quite close. Therefore, a guard band is required between the two unsynchronized TDD carriers.

The operation of a TDD system and an FDD system using adjacent carriers is another scenario where guard bands may be required. The adjacent TDD and FDD carriers may belong to different frequency bands, but the bands are adjacent. An example is operation in 2.6 GHz, for example, LTE FDD band 7 and LTE TDD band 38. The TDD band 38 operates in the center of FDD band 7. Therefore, to reduce, avoid, and/or minimize inter-system interference, restricted use of 5 MHz of spectrum on each edge of the TDD band 38 may be recommended. The restricted usage corresponds to the guard band in a sense that both LTE TDD UE and LTE TDD BS transmissions at the edges of band 38 are allowed at very low output power.

### Multi-Carrier Aggregation System

To increase/enhance peak-rates within a technology, multi-carrier or carrier aggregation solutions are known. Each carrier in a multi-carrier or carrier aggregation system may generally be termed as a component carrier (CC) or sometimes is also referred to as a cell. The term carrier aggregation (CA) may also be referred to using terms such as "multi-carrier system", "multi-cell operation", "multi-carrier operation", "multi-carrier" transmission, and/or reception. This means the CA is used for transmission of signaling and data in the uplink and downlink directions. One of the CCs is the primary carrier or anchor carrier and the remaining CCs are called secondary or supplementary carriers. Generally, the primary or anchor CC carries the essential UE specific signaling. The primary CC exists in both uplink and direction CA. The network may assign different primary carriers to different UEs operating in the same sector or cell. Thanks to carrier aggregation, the UE has more than one serving cell: one primary serving cell and one or more secondary serving cell(s). The serving cell may alternatively be referred to as a primary cell (PCell) or primary serving cell (PSC). Similarly the secondary serving cell may be referred to as a secondary cell (SCell) or secondary serving cell (SSC). Regardless of the terminology, the PCell and SCell(s) enable the UE to receive and transmit data. More specifically the PCell and SCell exist in DL and UL for the reception and transmission of data by the UE. The remaining non-serving cells on the Primary Component Carrier (PCC) and Secondary Component Carrier (SCC) are called neighbor cells.

The CCs belonging to the CA may belong to the same frequency band (also referred to as intra-band CA) or to a different frequency band(s) (inter-band CA) or any combination thereof (e.g., 2 CCs in band A and 1 CC in band B). The carriers in intra-band CA can be adjacent (also referred to as contiguous) or non-adjacent (also referred to as non-contiguous). In non-adjacent intra-band CA, the carriers in gaps may typically be used by other operators. Typically, in intra-band CA, the UE may require a single RF receiver chain and RF transmitter chain to receive and transmit the aggregated carriers respectively, especially when the total aggregated carriers are within a certain limit (e.g. 20 MHz in total for HSPA or 40 MHz in total for LTE). Otherwise, the UE may have to implement multiple RF transmitter/receiver chains for an aggregated larger number of carriers and particularly in case of non-contiguous CA.

The inter-band CA including carriers distributed over two bands is also referred to as dual-band-dual-carrier High Speed Downlink Packet Access (DB-DC-HSDPA) in HSPA (High Speed Packet Access). Furthermore the CCs in intra-band CA may be adjacent or non-adjacent in frequency domain (also referred to as intra-band non-adjacent CA). A hybrid CA including intra-band adjacent CA, intra-band non-adjacent CA, and inter-band CA is also possible.

In HSPA release 10 (also referred to as 4C-HSDPA), up to 4 DL carriers can be aggregated where the DL carriers or DL cells may belong to the same frequency band or may be split over two different frequency bands (e.g. 3 adjacent DL carriers in band I at 2.1 GHz and 1 DL carrier in band VIII at 900 MHz). In HSPA Rel-11 (also referred to as 8C-HSDPA), up to 8 DL carriers may be aggregated, and the DL carriers may be distributed over 2 or even more bands. In the present version of the HSPA and LTE specifications (i.e., rel-10), all the carriers that belong to one frequency band may have to be adjacent when configured by higher layers (e.g. RRC or Radio Resource Control). The operation on non-adjacent carriers within the same band, however, may result from the carrier activation/deactivation, which is performed by the lower layers (e.g., the MAC or Media Access Control layer). As stated above, however, the non-adjacent carriers within the same band may also be configurable provided that the UE supports this capability.

In principle, up to 5 DL carriers and 5 UL carriers (each of up to 20 MHz) may be aggregated by the UE in LTE intra-band CA. Even more carriers may be introduced in future releases. UE requirements exist for at least 2 DL carriers and 2 UL carriers (e.g., up to 40 MHz in UL and DL) according to release 10. The intra-band non-contiguous CA is also possible in LTE both in the DL and UL. The UE may use single RF chain or multiple RF chains depending upon the aggregated bandwidth.

In LTE inter-band CA, up to 5 DL and 5 UL carriers (each of up to 20 MHz and belonging to different bands) can be aggregated by the UE. Even additional carriers belonging to different bands may be introduced in future releases. UE requirements exist for at least 2 DL carriers belong to 2 different bands and 1 UL carriers in release 10. The requirements for 2 UL inter-band CA are being introduced in release 11. Typically, for inter-band CA, the UE has an independent RF chain for each CC which may belong to a different frequency band.

The CCs in CA may or may not be co-located in the same site or base station. For example, the CCs may originate (i.e., may be transmitted / received) at different locations (e.g. from non-located BS, RRH or remote radio head, or RRU or remote radio unit). Examples of combined CA and multi-point communication include DAS (Distributed Antenna System), RRH (Remote Radio Head), RRU (Remote Radio Unit), CoMP (coordinated multi-point), and multi-point transmission / reception, etc. Embodiments discussed herein may also apply to multi-point carrier aggregation systems.

### Signal Activity Patterns

Signal activity patterns are described below for transmit and receive activity patterns.

### Transmit Activity Patterns

A transmit activity pattern includes indication of time period(s) with no or very low signal transmission followed by time period(s) with normal signal transmission. The transmit activity pattern can be in the downlink (e.g. on signals transmitted by base station) or uplink (e.g. on signals transmitted by UE). Transmit activity patterns may relate to DL or UL transmissions. Some non-limiting examples of transmit activity patterns include:
(1) Any transmit pattern in general,
(2) Almost Blank Subframe (ABS) pattern used for interference coordination in heterogeneous networks;
(3) Signal transmissions following a certain pattern (e.g., periodic satellite, radar transmissions, and/or high-power physical signal transmissions in a cellular network);
(4) Discontinuous transmission (DTX) in DL;
(5) DTX (Discontinuous Transmission) in UL; and/or
(6) UL-DL TDD configuration (e.g. TDD UL-DL subframe configuration, TDD special subframe configuration, etc.)

### Receive Activity Patterns

The receive activity pattern (including time period(s) with no or very limited signals) may be required to be received followed by time period(s) with normal signal reception. A receive activity pattern may relate to receiving DL or UL signals and/or channels. The transmit activity pattern may also be in the downlink (e.g., on signals received by the UE) or uplink (e.g., on signals received by the BS). Some non-limiting examples of receive activity patterns are identified as follows:
(1) Any measurement pattern in general;
(2) Time-domain measurement pattern used for interference coordination in heterogeneous networks;
(3) DRX; and/or
(4) UL-DL TDD configuration (e.g. TDD UL-DL subframe configuration, TDD special subframe configuration, etc.

### Scenarios with Low Traffic Intensity

There are several scenarios where the traffic is low or sporadic. Examples of such scenarios are described below.

### Low-Traffic Load

Low-traffic time occasions may occur with different periodicities, over different time intervals, and for different reasons.

Certain services like speech may require low bit rate, and operation of these services may also be periodic (e.g. once every 20 ms for speech). The traffic may also follow certain scheduling patterns. For example, low-interference subframes may be configured in an LTE for different purposes such as MBSFN (Multi-Broadcast Single Frequency Network) subframes for backhaul communication for relays or low-power nodes, positioning subframes for positioning measurements, and/or almost blank subframes (ABS) for enhanced inter-cell interference coordination. Furthermore, at certain locations and/or times of day, the network activity may be very low. In an industrial zone, for example, the activity of the mobile network may be very low during night time, over weekends, and/or during holidays.

### Machine Type Communications

### Machine-to-machine (M2M) communication or Machine Type

Communication (MTC) may be used to establish communication between machines and between machines and humans. The communication may include exchange of data, signaling, measurement data, configuration information, etc. The device size may vary from that of a wallet to that of a base station. The M2M devices can be configured both for mobile operation and static operation. In most scenarios, the M2M devices will transmit and receive data occasionally, so that in some cases, the device receiver activity can be as low as in IDLE state or even lower.

European patent application EP1494490 A1 proposes to employ an Intra-Operator Guard Band Computer to compute the minimum necessary guard bands between frequency allocations for the different RATs of an operator and to communicate the guard bands to a Spectrum Re-Arranger.

International patent application WO 2008/035171 A2 discloses to pre-calculate carrier separations as a function of the size of the low QoS band, wherein the low QoS band is at the edge of a spectrum band.

United States patent US7151795 B1 discloses adjacent bands using guard bands, that is to say bands that are not utilized for transmission in order to prevent adjacent band interference.

International patent application WO2011/061164 discloses a communication device that has a controller operatively connected to at least a first transceiver and a second transceiver, wherein the first transceiver receives signals on one or more channels within a first frequency band and the second transceiver transmits signals on one or more channels within a second frequency band, wherein the first and second frequency bands are adjacent one another so that each of the first and second frequency bands has an adjacent border and a nonadjacent border. Coexistence between the first and second transceivers is achieved by adjusting receive and/or transmit filters associated with the transceivers to create a guard band that is located more in the first frequency band if the second transceiver is using frequencies close to its adjacent border, and a guard band that is more in the second frequency band if the second transceiver is not using frequencies close to its adjacent border.

### SUMMARY

It is an object of embodiments herein to provide an improved way of configuring a guard band.

According to a first aspect of embodiments herein, the object is achieved by a method in a first node and a first node for handling a pattern-based guard band. The first node is comprised in a wireless communications network. The method comprises configuring the pattern-based guard band, and applying the configured pattern-based guard band or signalling the configured pattern-based guard band to a second network node. The pattern-based guard band comprises a pattern. The pattern comprises at least a first set of time resources and a second set of time resources. The first set of time resources is associated with a first guard band configuration. The second set of time resources is associated with one of: no guard band configuration and a second guard band configuration. The second guard band configuration is different from the first guard band configuration.

According to a second aspect the object is achieved by a method in a second node for handling a pattern-based guard band. The second node is comprised in the wireless communications network. The method comprises obtaining a configured pattern-based guard band. The pattern-based guard band comprises a pattern. The pattern comprises at least a first set of time resources and a second set of time resources. The first set of time resources is associated with a first guard band configuration. The second set of time resources is associated with one of: no guard band configuration and a second guard band configuration. The second guard band configuration is different from the first guard band configuration. The pattern-based guard band is configured by the first node in the wireless communications network. The method also comprises adaptively configuring one more actions in response to the obtained pattern-based guard band.

According to a third aspect the object is achieved by a method in a third node for handling a pattern-based guard band. The third node is comprised in the wireless communications network. The method comprises sending a request to the first node in the wireless communications network to configure a pattern-based guard band. The pattern-based guard band comprises a pattern. The pattern comprises at least a first set of time resources and a second set of time resources. The first set of time resources is associated with a first guard band configuration. The second set of time resources is associated with one of: no guard band configuration and a second guard band configuration. The second guard band configuration is different from the first guard band configuration.

According to a fourth aspect the object is achieved by the first node for handling a pattern-based guard band. The first node is adapted to be comprised in the wireless communications network. The first node comprises a configuring circuit configured to configure the pattern-based guard band. The pattern-based guard band comprises a pattern. The pattern comprises at least a first set of time resources and a second set of time resources. The first set of time resources is associated with a first guard band configuration. The second set of time resources is associated with one of: no guard band configuration and a second guard band configuration. The second guard band configuration is different from the first guard band configuration.

According to a fifth aspect the object is achieved by the second node for handling a pattern-based guard band. The second node is adapted to be comprised in a wireless communications network. The second node comprises an obtaining circuit configured to obtain a configured pattern-based guard band. The pattern-based guard band comprises a pattern. The pattern comprises at least a first set of time resources and a second set of time resources. The first set of time resources is associated with a first guard band configuration. The second set of time resources is associated with one of: no guard band configuration and a second guard band configuration. The second guard band configuration is different from the first guard band configuration. The pattern-based guard band is configured by the first node, which is adapted to be comprised in the wireless communications network. The second node also comprises a configuring circuit. The configuring circuit is configured to adaptively configure one more actions in response to the obtained pattern-based guard band.

According to a sixth aspect the object is achieved by the third node for handling a pattern-based guard band. The third node is adapted to be comprised in the wireless communications network. The third node comprises a sending circuit configured to send a request to the first node. The first node is adapted to be comprised in the wireless communications network. The request is to configure a pattern-based guard band. The pattern-based guard band comprises a pattern. The pattern comprises at least a first set of time resources and a second set of time resources. The first set of time resources is associated with a first guard band configuration. The second set of time resources is associated with one of: no guard band configuration and a second guard band configuration. The second guard band configuration is different from the first guard band configuration.

By using the described pattern-based guard band, an improved guard band is provided, since the guard band does not always use the same radio resources. The usage of radio resources changes according to the guard band pattern.

A particular advantage of the embodiments herein is that more efficient resource utilization may be provided in both aggressor and victim systems, and flexible guard band configuration may be provided when the guard band may be configured as a pattern. In an aggressor system, reduced wasting of resources may be provided compared to statically configured guard bands. In a victim system, improved awareness of the aggressor transmissions may be provided.

A further particular advantage of the embodiments herein is that reduced signaling overhead may be provided compared to a fully dynamic guard band configuration. Workload may be reduced for radio nodes compared to fully dynamic guard band configuration, because the guard band may be configured by a third node. eICIC may be performed and/or adapted in a co-existence scenario.

### BRIEF DESCRIPTION OF THE DRAWINGS

The accompanying drawings, which are included to provide a further understanding of the disclosure and are incorporated in and constitute a part of this application, illustrate certain non-limiting embodiment(s) of the invention. In the drawings:
Figure 1 illustrates a wireless communications network that includes user equipment, radio network nodes, and network nodes which can be configured to operate according to some embodiments;
Figure 2 illustrates a table of operational bands for E-UTRA;
Figure 3 illustrates a guard band between a public mobile band and a private land mobile band;
Figures 4a, 4b, and 4c illustrate guard bands that are provided between adjacent transmitter and receiver bands;
Figures 5a, 5b, 5c and 5d illustrate a schematic block diagram of a wireless communications network, according to some embodiments;
Figures 6a, 6b, and 6c illustrate guard bands scheduled at specific time occasions according to some embodiments;
Figure 7 is a flowchart depicting embodiments of a method in a first node, according to some embodiments;
Figure 8 is a flowchart depicting embodiments of a method in a second node, according to some embodiments;
Figure 9 is a flowchart depicting embodiments of a method in a third node, according to some embodiments;
Figure 10 is a block diagram of a first node that is configured according to some embodiments;
Figure 11 is a block diagram of a second node that is configured according to some embodiments; and
Figure 12 is a block diagram of a third node that is configured according to some embodiments; and
Figure 13 illustrates a wireless communications network that includes user equipment, radio network nodes, and network nodes which may implement guard bands according to some embodiments.

### DETAILED DESCRIPTION

As part of the development of embodiments herein, a number of problems with the existing systems will first be identified and discussed.

At least the following problems with existing systems may be envisioned. First, resource utilization may be inefficient if guard bands are configured over a continuous time period, such as,
(1) An aggressor system may be not generate interference during a continuous period of time, e.g., due to discontinuous transmission activity in the entire aggressor system or its part or due to discontinuous transmissions of specific signals that have significant impact on the victim system (not all transmissions may have the same impact),
(2) A victim system may not need protection during a continuous period of time, e.g., due to discontinuous reception of signals particularly sensitive to the aggressor interference, and/or
(3) Under moderate traffic load, the victim system may not continuously schedule users. Under low load or during certain time(s) of the day, the victim system may even schedule data sporadically. In these scenarios the traditional approach of continuously maintaining guard band in the aggressor system may lead to unnecessary wastage of resources in the aggressor system.

Second, when aggressor interference is dynamically varying, dynamic configuration or reconfiguration of guard bands may lead to a significant signaling overhead in the event that the guard band information needs to be exchanged with or communicated to another node.

Third, the existing signal activity pattern with restricted transmission (e.g. ABS pattern) used in heterogeneous networks may be employed in an aggressor system to lower interference towards the victim system. These patterns, however, may not take into consideration the impact of radio emissions in an adjacent carrier or frequency band(s). In other words, the existing patterns may be used regardless of whether there is a co-existence problem between the spectrum used by the aggressor system and that used by the victim system. Furthermore, guard bands, if configured in the victim system, may not depend on the low-activity patterns in the aggressor system. In a common co-existence scenario, when aggressor and victim carriers are adjacent or closely located, the signal transmitted by the victim carrier generates out-of-band emission into the carrier of the victim system, which may occur, for example, due to imperfections in RF components in general and imperfection in RF components in the RF filter. The generated out-of band emissions may degrade the victim's receiver performance. The generated out-of band emissions, if they are strong, may even block the victim's receiver from receiving any signal (including the intended useful signal) resulting in a complete disruption of the victim's receiver. The aggressor receiver may also generate harmonics into the victim's receiver or even into the victim's transmitter. Another type of unwanted emissions is spurious emissions in the spurious frequency domain (e.g., harmonics which occur not necessarily in the adjacent band but in portions of the spectrum determined by the frequencies of the mixed signals).

Embodiments will now be described more fully hereinafter with reference to the accompanying drawings, in which examples of embodiments of the claimed subject matter are shown. The claimed subject matter may, however, be embodied in many different forms and should not be construed as limited to the embodiments set forth herein. It should also be noted that these embodiments are not mutually exclusive. Components from one embodiment may be tacitly assumed to be present/used in another embodiment.

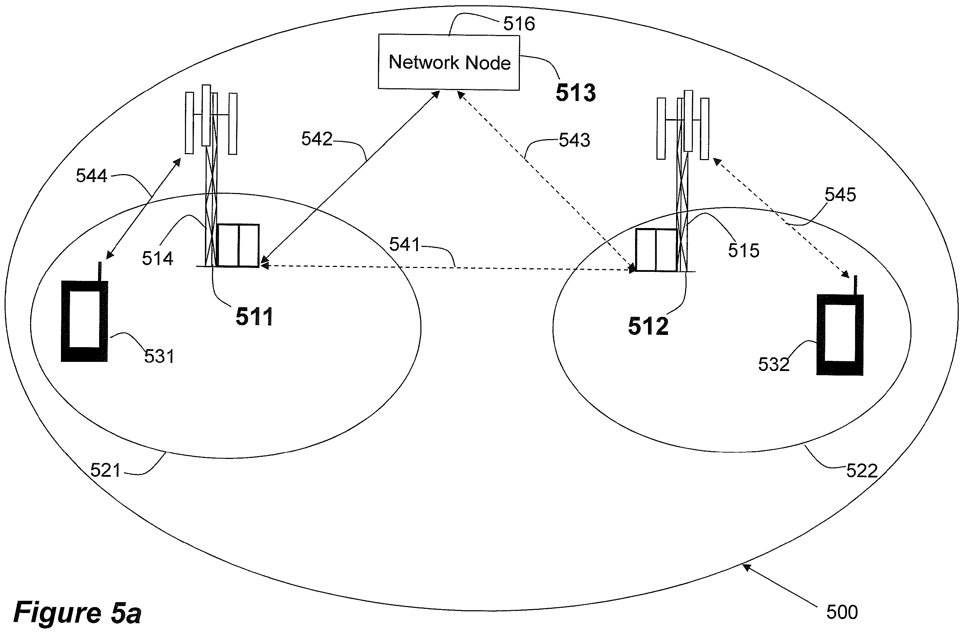

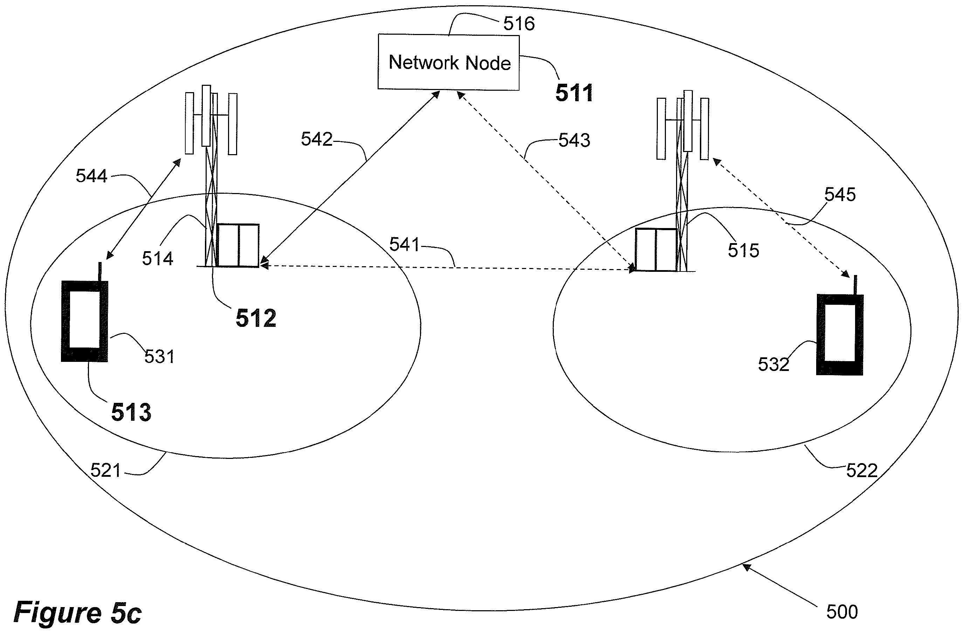

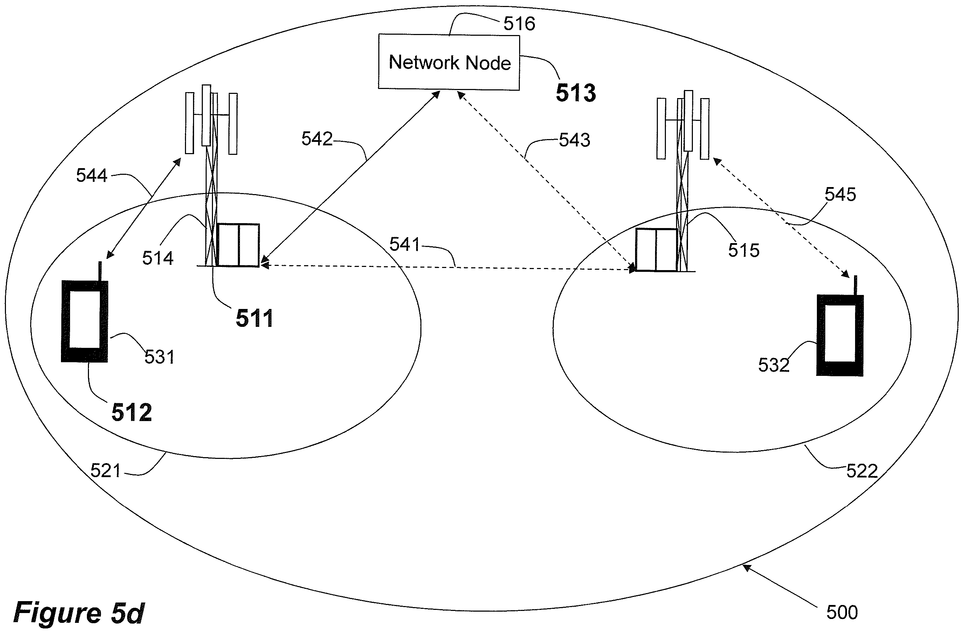

**Figures 5a****-d** depict **a wireless communications network 500** in which embodiments herein may be implemented. The wireless communications network 500 may for example be a network such as a Long-Term Evolution (LTE), e.g. LTE Frequency Division Duplex (FDD), LTE Time Division Duplex (TDD), LTE Half-Duplex Frequency Division Duplex (HD-FDD), Wideband Code Division Multiple Access (WCDMA), Universal Terrestrial Radio Access (UTRA) TDD, Global System for Mobile communications (GSM) network, GSM/Enhanced Data Rate for GSM Evolution (EDGE) Radio Access Network (GERAN) network, EDGE network, network comprising of any combination of Radio Access Technologies (RATs) such as e.g. Multi-Standard Radio (MSR) base stations, multi-RAT base stations etc., any 3rd Generation Partnership Project (3GPP) cellular network, Worldwide Interoperability for Microwave Access (WiMax), or any cellular network or system.

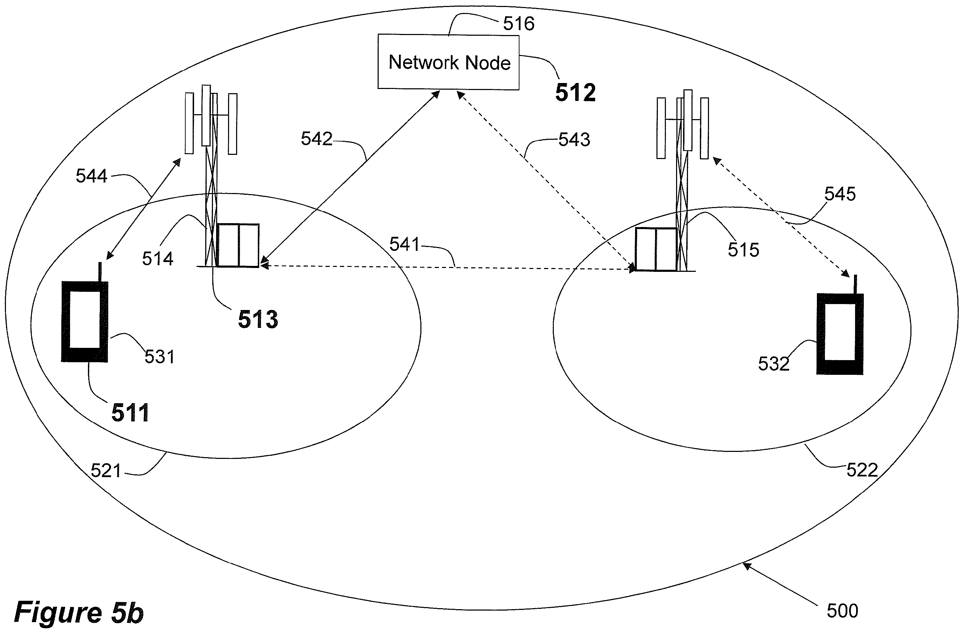

The wireless communications network 500 comprises a **first node 511,** a **second node 512,** and a **third node 513.** In the embodiment of Figure 5a, and for illustrative purposes only, each of the first node 511, the second node 512 and the third node 513 may be network nodes. However, in other embodiments, such as those depicted in Figures 5b-d, any of the first node 511, the second node 512 and the third node 513 may also be any of a wireless device, a radio network node, or a network node in general, as defined below. The wireless communications network 500 comprises a **first radio node** 5**14** and a **second radio node 515.** Each of the first radio node 514 and the second radio node 515 may be, for example, base stations such as e.g. an eNB, eNodeB, or a Home Node B, a Home eNode B, femto Base Station, BS, pico BS or any other network unit capable to serve a device or a machine type communication device in a wireless communications network 500. In some particular embodiments, the first radio node 514 or the second radio node 515 may be a stationary relay node or a mobile relay node. The mixed wireless network 500 covers a geographical area which is divided into cell areas, wherein each cell area is served by a network node, although, one network node may serve one or several cells. In the examples depicted in Figure 5a-d, the first radio node 514 serves **a first cell 521,** and the second radio node 515 serves **a second cell 522.** Each of the first radio node 514 and the second radio node 515 may be of different classes, such as e.g. macro eNodeB, home eNodeB or pico base station, based on transmission power and thereby also cell size. Typically, wireless communications network 500 may comprise more cells similar to 521 and 522, served by their respective network nodes. This is not depicted in Figures 5a-d for the sake of simplicity. Each of the first radio node 514 and the second radio node 515 may support one or several communication technologies, and its name may depend on the technology and terminology used. In 3GPP LTE network nodes, which may be referred to as eNodeBs or even eNBs, may be directly connected to one or more core networks.

In some embodiments, such as in that depicted in Figure 5a, the third node 513 may be a **network node 516.** The network node 516 may be, for example, a "centralized network management node" or "coordinating node", which as used herein is a network node, which may also be a radio network node, which coordinates radio resources with one or more radio network nodes and/or UEs. Some examples of the coordinating node are network monitoring and configuration node, Operations Support System (OSS) node, Operations & Maintenance (O&M) node, Minimization of Drive Tests (MDT) node, Self-Organizing Network (SON) node, positioning node, a gateway node such as Packet Data Network Gateway (P-GW) or Serving Gateway (S-GW) network node or femto gateway node, a macro node coordinating smaller radio nodes associated with it, etc.

Further detailed information on network node and radio network node is provided below under the heading "Generalizations".

The first radio node 514 may e.g. communicate with the second radio node 515 over a **link 541** and communicate with the network node 516 over a **link 542.** The second radio node 515 may communicate with the network node 516 over a **link 543.**

A number of wireless devices are located in the wireless communications network 500. In the example scenarios of Figures 5a-d, only two wireless devices are shown, **first wireless device 531,** and **second wireless device 532.** The first wireless device 531 may e.g. communicate with the first radio node 514 over a **radio link 544.** The second wireless device 532 may communicate with the second radio node 515 over a **radio link 545.**

Each of the first wireless device 531 and second wireless device 532 is a wireless communication device such as a UE which is also known as e.g. mobile terminal, wireless terminal and/or mobile station. The device is wireless, i.e., it is enabled to communicate wirelessly in a wireless communication network, sometimes also referred to as a cellular radio system or cellular network. The communication may be performed e.g., between two devices, between a device and a regular telephone and/or between a device and a server. The communication may be performed e.g., via a RAN and possibly one or more core networks, comprised within the wireless network.

Each of the first wireless device 531 and second wireless device 532 may further be referred to as a mobile telephone, cellular telephone, or laptop with wireless capability, just to mention some further examples. Each of the first wireless device 531 and second wireless device 532 in the present context may be, for example, portable, pocket-storable, hand-held, computer-comprised, or vehicle-mounted mobile devices, enabled to communicate voice and/or data, via the RAN, with another entity, such as a server, a laptop, a Personal Digital Assistant (PDA), or a tablet computer, sometimes referred to as a surf plate with wireless capability, Machine-to-Machine (M2M) devices, devices equipped with a wireless interface, such as a printer or a file storage device or any other radio network unit capable of communicating over a radio link in a cellular communications system.

Further detailed information of the first node 511, second node 512, third node 513 and the wireless communications network 500 is provided below under the heading "Generalizations".

As stated earlier, and as it is explained in detail in under the headings and subheadings following the actions and systems claimed herein, any of the first node 511, the second node 512 or the third node 513 may be one of: a first radio node 514, a second radio node 515, a network node 516, or a wireless device 531, 532.

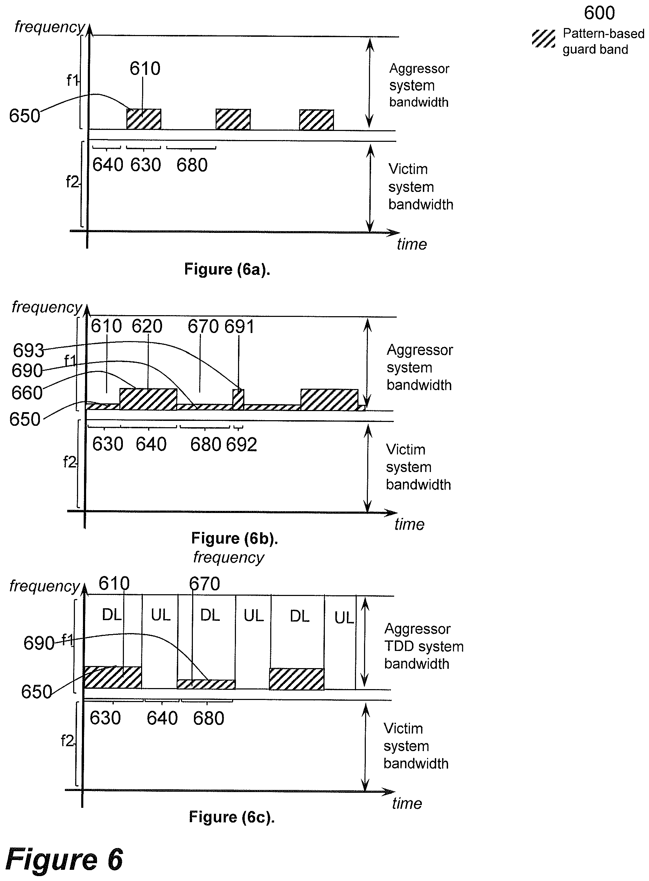

Example of embodiments of methods in the first node 511, in the second node 512 and in the third node 513 for handling a pattern-based guard band, will now be described in reference to the embodiments of a pattern-based guard band depicted in **Figures 6a-c****.** Each of Figures 6a-c shows a non-limiting example of a **pattern-based guard band 600,** as described below in detail under the heading "Pattern-Based Guard Bands" and the subheading "Information Related to Guard Band Patterns". The pattern-based guard band 600 in each of the examples in Figures 6a-c shows at least a **first guard band configuration 610.** Figure 6b shows also at least a **second guard band configuration 620.** Each of the first guard band configurations 610, and the second guard band configuration 620 is associated with a set of time resources, but may also be associated with a set of frequency resources and/or power levels. As shown in Figures 6a-c, each of the pattern-based guard band 600 has at least a **first set of time resources 630** and a **second set of time resources 640,** which are not necessarily first and second in time, as shown for example, in Figures 6a and 6b. The first set of time resources 630 is associated with the first guard band configuration 610. In some embodiments, such as those depicted in Figure 6a and 6c, the second set of time resources 640 may be associated with no guard band configuration. In other embodiments, such as that shown in Figure 6b, the second set of time resources 640 may be associated with the second guard band configuration 620. As can be appreciated in this example, the second guard band configuration 620 is different from the first guard band configuration 610. The first guard band configuration 610 and the second guard band configuration 620 may be different in any of the characteristics or parameters detailed below under the heading "Pattern-Based Guard Bands" and the subheading "Information Related to Guard Band Patterns". For example, the first guard band configuration 610 and the second guard band configuration 620 may be different in terms of frequency resources. As shown in Figures 6a-c, each of the pattern-based guard band 600 may have at least a first **set of frequency resources 650** and a **second set of frequency resources 660.** The first guard band configurations 610 may be associated with the first set of frequency resources 650. The second guard band configuration 620 may be associated with the second set of frequency resources 660. As shown in Figures 6a-c, in some embodiments, pattern-based guard band 600 may have a **third configuration 670** associated with a **third set of time resources 680** and a **third set of frequency resources 690.** In some embodiments, as shown in Figure 6b, pattern-based guard band 600 may have a **fourth configuration 691** associated with a **fourth set of time resources 692** and a **fourth set of frequency resources 693.** These embodiments are not meant to be limiting, as pattern-based guard band 600 may have more than four configurations in some embodiments, and each may have its respective set of time resources and set of frequency resources and/or power levels.

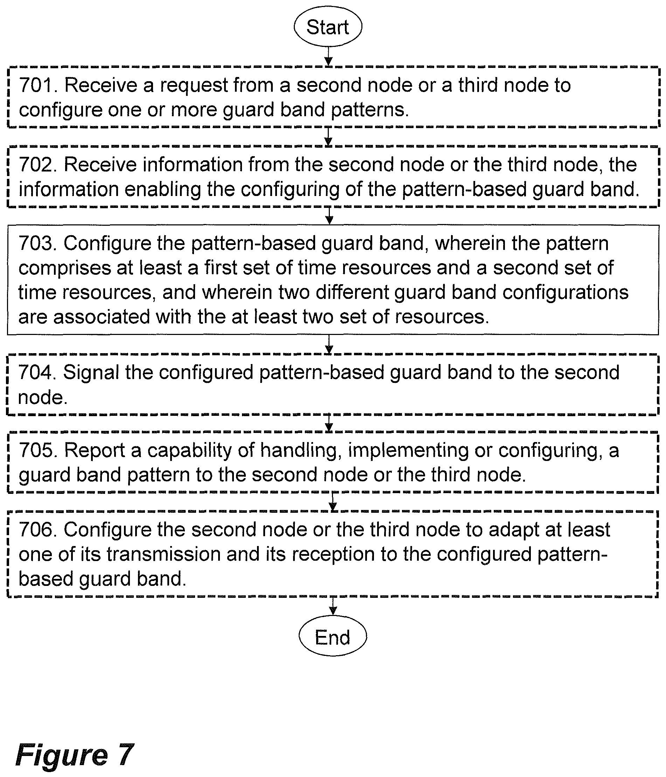

A method in the first node 511, the second node 512 and the third node 513 will first be described in a general way, followed by a more detailed description. Example of embodiments of a method in the first node 511 for handling a pattern-based guard band 600, will now be described with reference to a flowchart depicted in **Figure 7****.** The first node 511, the second node 512 and the third node 513 may be comprised in the wireless communications network 500.

In some embodiments, the first node 511 may be one of: an aggressor system and a victim system. Information on these and other embodiments may be found below in further detail under the subheading "Method Of Signaling Means and Nodes Involved in Communication of the Information Related to Pattern-Based Guard Bands".

In some embodiments, the guard band 600 may comprise at least one of: an unused spectrum and spectrum with restricted operation. The restricted operation may be typically realized by allowing the transmitter to transmit at lower power level, i.e., below a certain threshold.

Further detailed information of the pattern-based guard band is provided below under the heading "Pattern-Based Guard Bands".

The method comprises the following actions, which actions may be taken in any suitable order. Dashed lines of some boxes in Figure 7 indicate that the action is not mandatory.

### Action 701

As a non-limiting illustrating scenario, when an aggressor system may have unwanted emissions into the operating carrier frequency of a victim system, the pattern-based guard band 600 described herein may be used to mitigate fully and/or partly this interference. In some embodiments, the system which is victim to the aggressor system's interference, may send a request to the aggressor system to configure such a pattern-based guard band 600. In other embodiments, another node, such as the third node 513, e.g., a network node 516, may send this request.

Thus, in some embodiments, the first node 511 may receive a request from at least one of the second node 512 and a third node 513 in the wireless communications network 500 to configure one or more guard band patterns. This is an optional action.

The action of receiving a request is described below in further detail under the subheading "Method Of Signaling Means and Nodes Involved in Communication of the Information Related to Pattern-Based Guard Bands".

### Action 702

Following the illustrating example given, an aggressor may need information related to the pattern-based guard band 600 in order to configure the pattern-based guard band 600 and adapt its transmission activity accordingly. This information related to the pattern-based guard band 600 may be signalled to the aggressor. For example, the information may be signaled by a victim such as the second node 512 in some embodiments, another aggressor, or the third node 513.

In some embodiments, the first node 511 may receive information from at least one of the second node 512 and a third node 513 in the wireless communications network 500, the information enabling a configuring of the pattern-based guard band 600.

Methods of performing the receiving step are described below in further detail under the subheading "Method of Signaling Means and Nodes Involved in Communication of the Information Related to Pattern-Based Guard Bands". This section also contains a description of examples of the information received in this step.

### Action 703

In this action, the first node 511, configures the pattern-based guard band 600. The pattern-based guard band 600 comprises a pattern. The pattern comprises at least a first set of time resources 630 and a second set of time resources 640. The first set of time resources 630 is associated with the first guard band configuration 610. The second set of time resources 640 is associated with one of: no guard band configuration and a second guard band configuration 620, wherein the second guard band configuration 620 is different from the first guard band configuration 610. In some embodiments, the second set of time resources 640 is associated with no guard band configuration. In other embodiments, the second set of time resources 640 is associated with the second guard band configuration 620, wherein the second guard band configuration 620 is different from the first guard band configuration 610.

In some of these embodiments, at least one of the first set of time resources 630 and the second set of time resources 640 comprises at least one of: a time slot, a subframe and a radio frame.

In some embodiments, the pattern may be adaptively configured based on at least one of: time- and/or frequency-varying aggressor interference from an aggressor system, amount of impact on a victim system of different transmissions in the aggressor system, time- and/or frequency-varying victim signal receptions in the victim system, and sensitivity to the aggressor interference of different victim signal receptions in the victim system.

In some embodiments, the pattern may be associated with at least one of: a DownLink, DL, or UpLink, UL, transmission, a duplex configuration in aggressor or victim, a UL-DL Time Division Duplex configuration, a transmit activity pattern in an aggressor or a victim, a receive pattern in a victim, and a specific signal of a victim or an aggressor.

In some embodiments, the pattern may further comprise information on at least one of: pattern length, frequency information of an aggressor, multi-level pattern sequence, time unit and granularity of pattern sequence, pattern repetition type, periodicity or repetition period, reference time point from where a sequence is calculated or derived, starting time point from when the pattern applies, ending time point until which the pattern applies, duration of pattern, modification time, starting condition, ending condition, modification condition, transmit power level in aggressor system, direction of applicability of guard band pattern, and location information where guard band pattern is applied.

In some embodiments, the configuring is based on information regarding a capability of supporting guard band patterns of at least one of: the second node 512 and a third node 513 in the wireless communications network 500.

In some embodiments, the configuring is performed at least one of: periodically, on a request from another node 512, 513, upon being triggered by an event, triggered by a condition, and upon expiry of a timer and after certain time duration.

Different embodiments of the configuring action 703 are described below in further detail under the headings "Pattern-Based Guard Bands", "Methods in a Node of an Aggressor System to Configure Pattern-Based Guard Bands", and the subheadings "Information Related to Guard Band Patterns" and "Method of Signaling Means and Nodes Involved in Communication of the Information Related to Pattern-Based Guard Bands".

### Action 704

Following the illustrating example given, in some embodiments, the aggressor system may signal the configured pattern-based guard band 600 to another node, which may then apply the configured pattern-based guard band 600.

Thus, in some embodiments, the first node 511 may comprise signalling the configured pattern-based guard band 600 to a second node 512 in the wireless communication network 500. This is an optional action.

This action is described below in further detail under the heading "Methods in a Node of an Aggressor System to Configure Pattern-Based Guard Bands".

### Action 705

As the capability to handle, implement or configure a guard band pattern may vary among different nodes, as described later, in some embodiments, the first node 511 may report a capability of handling, implementing or configuring, a guard band pattern to one of: the second node 512 and the third node 513 in the wireless communications network 500. This is an optional action. This action may allow, for example, the receiving node to adapt its operation or the sending node to use guard band patterns or indicate to another node its capability associated with a guard band pattern.

Capability of handling, implementing or configuring, a guard band pattern is described below in further detail under the subheading "UE and Network Node Capabilities Related to Guard Band Patterns".

### Action 706

Following the illustrating example given, in some embodiments, the aggressor system may adapt its own actions according to the configured pattern-based guard band 600 in order to mitigate fully and/or partly this interference on the operating carrier frequency of the victim system. In other embodiments, the aggressor system may configure the victim system instead to adapt at least one of its transmission and its reception to the configured pattern-based guard band 600.

Thus, in this action, the first node 511 may configure one of the second node 512 and the third node 513 to adapt at least one of its transmission and its reception to the configured pattern-based guard band 600. This is an optional action.

This action is described below in further detail under the heading "Methods in a Node of an Aggressor System to Configure Pattern-Based Guard Bands".

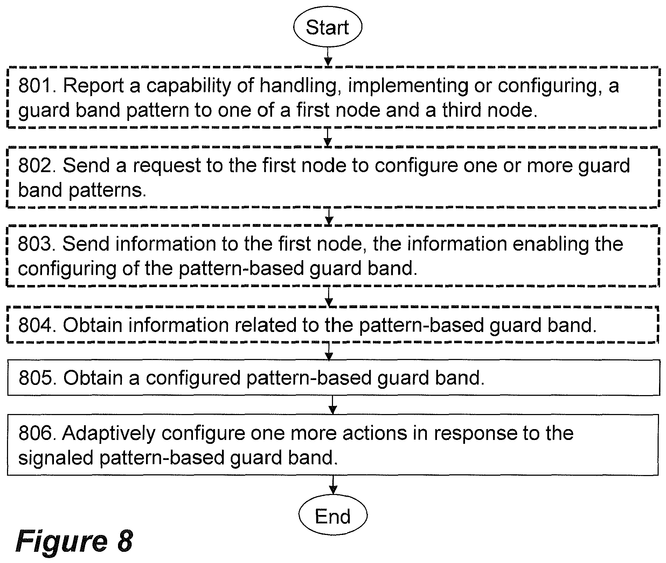

Example of embodiments of a method in the second node 512 for handling a pattern-based guard band 600, will now be described with reference to a flowchart depicted in **Figure 8****.** The first node 511, the second node 512 and the third node 513 may be comprised in the wireless communications network 500.

In some embodiments, each of the first node 511 and the second node 512 may be one of: an aggressor system and a victim system.

The detailed description of some of the following actions, which are mirror actions to those described in 701-706 for the first node 511, corresponds to the same references provided above, and will thus not be repeated here. For example, further detailed information of the pattern-based guard band is provided below under the heading "Pattern-Based Guard Bands".

In some embodiments, the guard band 600 may comprise at least one of: an unused spectrum and spectrum with restricted operation. The restricted operation may be typically realized by allowing the transmitter to transmit at lower power level, i.e., below a certain threshold.

As stated earlier, any of the first node 511, the second node 512 or the third node 513 may be one of: a first radio node 514, a second radio node 515, a network node 516, or a wireless device 531, 532.

The method comprises the following actions, which actions may be taken in any suitable order. Dashed lines of some boxes in Figure 8 indicate that the action is not mandatory.

### Action 801

The second node 512 may report a capability of handling, implementing or configuring, a guard band pattern to one of the first node 511 and the third node 513. This is an optional action.

### Action 802

In some embodiments, the second node 512 sends a request to the first node 511 to configure one or more guard band patterns. This is an optional action.

### Action 803

The second node 512 may send information to the first node 511, the information enabling the configuring of the pattern-based guard band 600. This is an optional action.

### Action 804

In some embodiments, the second node 512 may obtain information related to the pattern-based guard band 600 from at least one of: the first node 511, measurements or sensing radio signals or total interferences, a wireless device 531, 532, a network node 514, 515, 516, an aggressor node, the third node 513, a node serving the second node 512, a pre-defined rule, and a configuration.

This action is described below in further detail under the heading "Methods in a Node or a UE of a Victim System to Adaptivelly Configure Transmissions and/or Receptions Responsive to a Pattern-Based Guard Band".

### Action 805

In this action, the second node 512 obtains the pattern-based guard band 600 configured by the first node 511 in the wireless communications network 500. The pattern-based guard band 600 comprises a pattern. The pattern comprises at least a first set of time resources 630 and a second set of time resources 640. The first set of time resources 630 is associated with the first guard band configuration 610. The second set of time resources 640 is associated with one of: no guard band configuration and a second guard band configuration 620, wherein the second guard band configuration 620 is different from the first guard band configuration 610. In some embodiments, the second set of time resources 640 is associated with no guard band configuration. In other embodiments, the second set of time resources 640 is associated with the second guard band configuration 620, wherein the second guard band configuration 620 is different from the first guard band configuration 610.

In some of these embodiments, at least one of the first set of time resources 630 and the second set of time resources 640 comprises at least one of: a time slot, a subframe and a radio frame.

In some embodiments, the pattern may be adaptively configured based on at least one of: time- and/or frequency-varying aggressor interference from an aggressor system, amount of impact on a victim system of different transmissions in the aggressor system, time- and/or frequency-varying victim signal receptions in the victim system, and sensitivity to the aggressor interference of different victim signal receptions in the victim system.

In some embodiments, the pattern may be associated with at least one of: a DownLink, DL, or UpLink, UL, transmission, a duplex configuration in aggressor or victim, a UL-DL Time Division Duplex configuration, a transmit activity pattern in an aggressor or a victim, a receive pattern in a victim, and a specific signal of a victim or an aggressor.

In some embodiments, the pattern may further comprise information on at least one of: pattern length, frequency information of an aggressor, multi-level pattern sequence, time unit and granularity of pattern sequence, pattern repetition type, periodicity or repetition period, reference time point from where a sequence is calculated or derived, starting time point from when the pattern applies, ending time point until which the pattern applies, duration of pattern, modification time, starting condition, ending condition, modification condition, transmit power level in aggressor system, direction of applicability of guard band pattern, and location information where guard band pattern is applied.

In some embodiments, the pattern-based guard band 600 is configured based on information regarding a capability of supporting guard band patterns of the second node 512 or a third node 513 in the wireless communications network 500.

In some embodiments, the pattern-based guard band 600 is configured at least one of: periodically, on a request from another node 512, 513, upon being triggered by an event, triggered by a condition, and upon expiry of a timer or after certain time duration.

In some embodiments, the obtaining may comprise receiving a configuration from the first node 511. This is an optional action.

### Action 806

In this action, the second node 512 adaptively configures one more actions in response to the obtained pattern-based guard band 600.

In some embodiments, the one or more actions may comprise at least one of: selection of a carrier for operation, operation of a victim carrier, adaptation of a bandwidth of a victim carrier, performing load balancing or traffic adaptation to move traffic between different carriers, a reception, a transmission, and enabling low-interference measurement occasions.

In some of these embodiments, enabling low-interference measurement occasions may comprise configuring a restricted measurement pattern.

In some embodiments, the adaptation of a reception or a transmission may be performed one of: periodically, upon a request from another node, triggered by an event, triggered by a condition, upon configuration by the first node 511, upon expiration of a timer, and after certain time duration.

In some embodiments, the adaptively configuring may be done so a requirement is met.

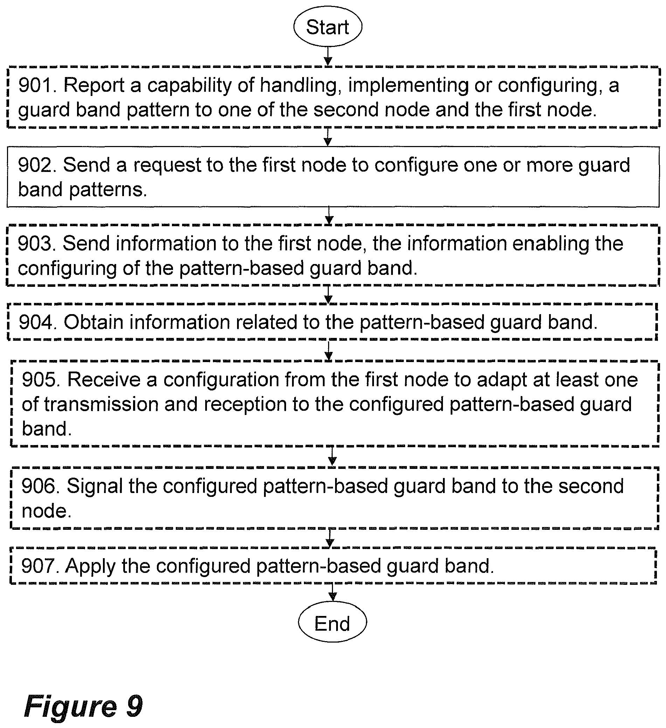

Example of embodiments of a method in a third node 513 for handling a pattern-based guard band 600, will now be described with reference to a flowchart depicted in **Figure 9****.** The third node 513 is comprised in the wireless communications network 500.

In some embodiments, the third node 513 may be one of an aggressor system and a victim system.

The detailed description of some of the following actions, which are mirror actions to those described in 701-706 for the first node 511, corresponds to the same references provided above, and will thus not be repeated here. For example, further detailed information of the pattern-based guard band is provided below under the heading "Pattern-Based Guard Bands".

In some embodiments, the guard band 600 may comprise at least one of: an unused spectrum and spectrum with restricted operation.

As stated earlier, any of the first node 511, the second node 512 or the third node 513 is one of: a first radio node 514, a second radio node 515, a network node 516, or a wireless device 531, 532.

The method comprises the following actions, which actions may be taken in any suitable order. Dashed lines of some boxes in Figure 9 indicate that the action is not mandatory.

### Action 901

In this action, the third node 513 may report a capability of handling, implementing or configuring, a guard band pattern to one of the second node 512 and the first node 511 in the wireless communications network 500. This is an optional action.

### Action 902

In this action, the third node 513 sends a request to a first node 511 in the wireless communications network 500 to configure a pattern-based guard band 600. The pattern-based guard band 600 comprises a pattern. The pattern comprises at least a first set of time resources 630 and a second set of time resources 640. The first set of time resources 630 is associated with the first guard band configuration 610. The second set of time resources 640 is associated with one of: no guard band configuration and a second guard band configuration 620, wherein the second guard band configuration 620 is different from the first guard band configuration 610. In some embodiments, the second set of time resources 640 is associated with no guard band configuration. In other embodiments, the second set of time resources 640 is associated with the second guard band configuration 620, wherein the second guard band configuration 620 is different from the first guard band configuration 610.

In some embodiments, the guard band 600 may comprise at least one of: an unused spectrum and spectrum with restricted operation.

In some embodiments, at least one of the first set of time resources 630 and the second set of time resources 640 may comprise at least one of: a time slot, a subframe and a radio frame.

In some embodiments, the pattern may be adaptively configured based on at least one of: time- and/or frequency-varying aggressor interference from an aggressor system, amount of impact on a victim system of different transmissions in the aggressor system, time- and/or frequency-varying victim signal receptions in the victim system, and sensitivity to the aggressor interference of different victim signal receptions in the victim system.

In some embodiments, the pattern may be associated with at least one of: a DownLink, DL, or UpLink, UL, transmission, a duplex configuration in aggressor or victim, a UL-DL Time Division Duplex configuration, a transmit activity pattern in an aggressor or a victim, a receive pattern in a victim, and a specific signal of a victim or an aggressor.

In some embodiments, the pattern may further comprise information on at least one of: pattern length, frequency information of an aggressor, multi-level pattern sequence, time unit and granularity of pattern sequence, pattern repetition type, periodicity or repetition period, reference time point from where a sequence is calculated or derived, starting time point from when the pattern applies, ending time point until which the pattern applies, duration of pattern, modification time, starting condition, ending condition, modification condition, transmit power level in aggressor system, direction of applicability of guard band pattern, and location information where guard band pattern is applied.

### Action 903

This is an optional action. In some embodiments, the third node 513 may send information to the first node 511, the information enabling the configuring of the pattern-based guard band 600.

### Action 904

This is an optional action. In some embodiments, the third node 513 may obtain information related to the pattern-based guard band 600 from at least one of: the first node 511, measurements or sensing radio signals or total interferences, a wireless device 531, 532, a network node 514, 515, 516, an aggressor node, the third node 513, a node serving the second node 512, a pre-defined rule, and a configuration..

### Action 905

This is an optional action. In some embodiments, the third node 513 may receive a configuration from the first node 511 to adapt at least one of transmission and reception to the configured pattern-based guard band 600.

### Action 906

This is an optional action. In some embodiments, the third node 513 may signal the configured pattern-based guard band 600 to a second node 512 in the wireless communication network 500.

This action is described below in further detail under the heading "Methods in a Node of an Aggressor System to Configure Pattern-Based Guard Bands".

### Action 907

This is an optional action. In some embodiments, the third node 513 may apply the configured pattern-based guard band 600.

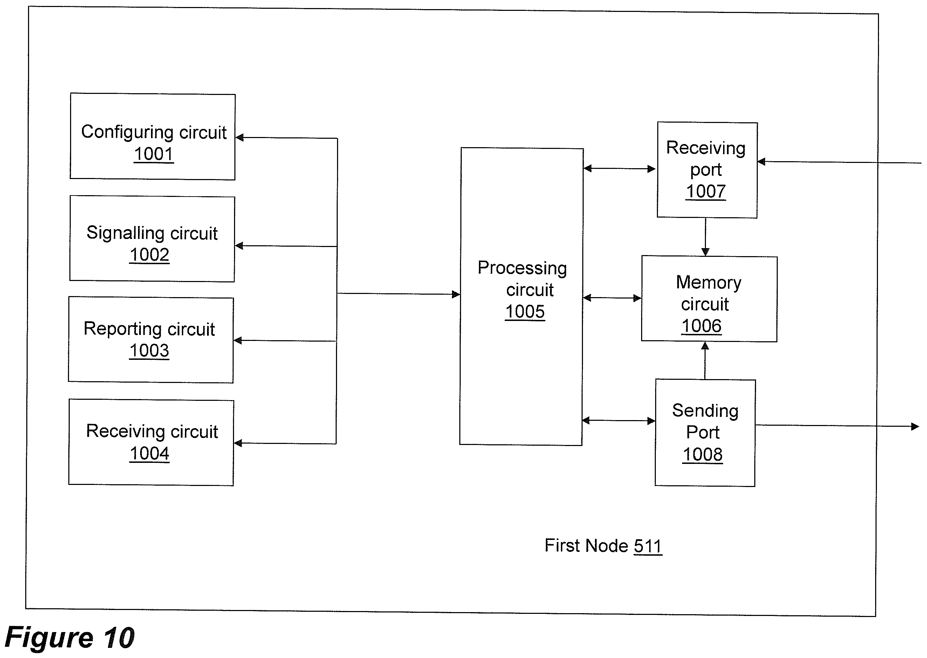

To perform the method actions in the first node 511 described above in relation to Figure 7 for handling a pattern-based guard band 600, the first node 511 comprises the following arrangement depicted in **Figure 10****.** The first node 511 is adapted to be comprised in the wireless communications network 500.

In some embodiments, the first node 511 may be one of: an aggressor system and a victim system.

The detailed description of some of the following corresponds to the same references provided above, in relation to the actions described for the first node 511, and will thus not be repeated here. For example, further detailed information of the pattern-based guard band is provided below under the heading "Pattern-Based Guard Bands".

Any of the first node 511, the second node 512 or the third node 513 is one of: a first radio node 514, a second radio node 515, a network node 516, or a wireless device 531, 532.

The first node 511 comprises a **configuring circuit 1001** configured to configure the pattern-based guard band 600, the pattern-based guard band 600 comprising a pattern, the pattern comprising at least a first set of time resources 630 and a second set of time resources 640, wherein the first set of time resources 630 is associated with a first guard band configuration 610 and the second set of time resources 640 is associated with one of: no guard band configuration and a second guard band configuration 620, wherein the second guard band configuration 620 is different from the first guard band configuration 610.

In some embodiments, the configuring 1001 circuit may be further configured to adaptively configure the pattern based on at least one of: time- and/or frequency-varying aggressor interference from an aggressor system, amount of impact on a victim system of different transmissions in the aggressor system, time- and/or frequency-varying victim signal receptions in the victim system, and sensitivity to the aggressor interference of different victim signal receptions in the victim system.

In some embodiments, the configuring 1001 circuit may be further configured to configure based on information regarding a capability of supporting guard band patterns of at least one of: the second node 512 and a third node 513, the third node 513 being adapted to be comprised in the wireless communications network 500.

In some embodiments, the configuring 1001 circuit may be further configured to configure at least one of: periodically, on a request from another node 512, 513, upon being triggered by an event, triggered by a condition, and upon expiry of a timer and after certain time duration.

In some embodiments, the configuring 1001 circuit may be further configured to configure one of the second node 512 and a third node 513 adapted to be comprised in the wireless communications network 500 to adapt at least one of its transmission and its reception to the configured pattern-based guard band 600.

In some embodiments, the guard band 600 may comprise at least one of: an unused spectrum and spectrum with restricted operation.

In some embodiments, at least one of the first set of time resources 630 and the second set of time resources 640 may comprise at least one of: a time slot, a subframe and a radio frame.

In some embodiments, the pattern may be associated with at least one of: a DownLink, DL, or UpLink, UL, transmission, a duplex configuration in aggressor or victim, a UL-DL Time Division Duplex configuration, a transmit activity pattern in an aggressor or a victim, a receive pattern in a victim, and a specific signal of a victim or an aggressor.

In some embodiments, the pattern may further comprise information on at least one of: pattern length, frequency information of an aggressor, multi-level pattern sequence, time unit and granularity of pattern sequence, pattern repetition type, periodicity or repetition period, reference time point from where a sequence is calculated or derived, starting time point from when the pattern applies, ending time point until which the pattern applies, duration of pattern, modification time, starting condition, ending condition, modification condition, transmit power level in aggressor system, direction of applicability of guard band pattern, and location information where guard band pattern is applied.

In some embodiments, the first node 511 may also comprise a **signaling circuit 1002** configured to signal the configured pattern-based guard band 600 to a second node 512 adapted to be comprised in the wireless communication network 500.

In some embodiments, the first node 511 may also comprise a **reporting circuit 1003** configured to report a capability of handling, implementing or configuring, a guard band pattern to one of: the second node 512 and a third node 513 adapted to be comprised in the wireless communications network 500.

In some embodiments, the first node 511 may also comprise a **receiving circuit 1004** configured to receive a request from at least one of the second node 512 and a third node 513 adapted to be comprised in the wireless communications network 500 to configure one or more guard band patterns.

In some embodiments, the receiving circuit 1004 may be further configured to receive information from at least one of the second node 512 and a third node 513 adapted to be comprised in the wireless communications network 500, the information enabling the configuring of the pattern-based guard band 600.

The embodiments herein for handling a pattern-based guard band 600 may be implemented through one or more processors, such as a **processing circuit 1005** in the first node 511 depicted in Figure 10, together with computer program code for performing the functions and actions of the embodiments herein. The program code mentioned above may also be provided as a computer program product, for instance in the form of a data carrier carrying computer program code for performing the embodiments herein when being loaded into the in the first node 511. One such carrier may be in the form of a CD ROM disc. It may be however feasible with other data carriers such as a memory stick. The computer program code may furthermore be provided as pure program code on a server and downloaded to the first node 511.

The first node 511 may further comprise a **memory circuit 1006** comprising one or more memory units. The memory circuit 1006 may be arranged to be used to store data such as, the information obtained, determined, received, sent, signalled or adapted by the processing circuit 1005 in relation to applications to perform the methods herein when being executed in the first node 511. Memory circuit 1006 may be in communication with the processing circuit 1005. Any of the other information processed by the processing circuit 1005 may also be stored in the memory circuit 1006.

In some embodiments, information such as information from the second or third nodes 512, 513 may be received through a **receiving port 1007.** In some embodiments, the receiving port 1007 may be, for example, connected to the one or more antennas in the first node 511. In other embodiments, the first node 511 may receive information from another structure in the wireless communications network 500 through the receiving port 1007. Since the receiving port 1007 may be in communication with the processing circuit 1005, the receiving port 1007 may then send the received information to the processing circuit 1005. The receiving port 1007 may also be configured to receive other information.

The information configured, signalled, reported or received by the processing circuit 1005 in relation to the pattern-based guard band 600, may be stored in the memory circuit 1006 which, as stated earlier, may be in communication with the processing circuit 1005 and the receiving port 1007.

The processing circuit 1005 may be further configured to send, report or signal information, such as information on capability to handle the information related to a guard band pattern, to the second node 512 or to the third node 513, through **a sending port 1008,** which may be in communication with the processing circuit 1005, and the memory circuit 1006.

Those skilled in the art will also appreciate that the configuring circuit 1001, the signalling circuit 1002, the reporting circuit 1003, and the receiving circuit 1004 described above may refer to a combination of analog and digital circuits, and/or one or more processors configured with software and/or firmware (e.g., stored in memory) that, when executed by the one or more processors such as the processing circuit 1005, perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

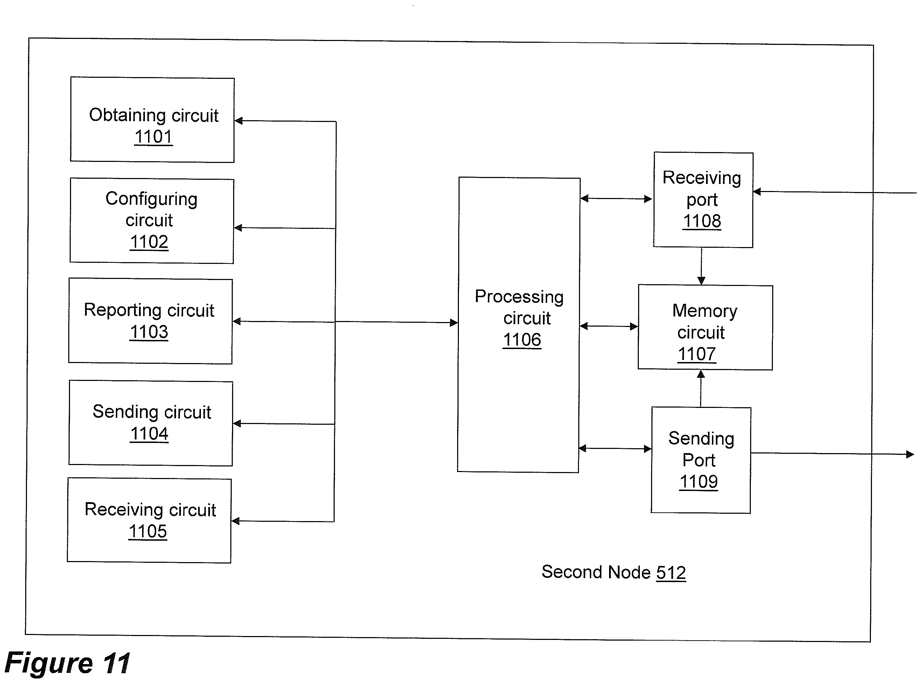

To perform the method actions in the second node 512 described above in relation to Figure 8 for handling a pattern-based guard band 600, the second node 512 comprises the following arrangement depicted in **Figure 11****.** The second node 512 is adapted to be comprised in the wireless communications network 500.

In some embodiments, each of the first node 511 and the second node 512 may be one of: an aggressor system and a victim system.

The detailed description of some of the following corresponds to the same references provided above, in relation to the actions described for the first node 511, and will thus not be repeated here. For example, further detailed information of the pattern-based guard band is provided below under the heading "Pattern-Based Guard Bands".

Any of the first node 511, the second node 512 or the third node 513 is one of: a first radio node 514, a second radio node 515, a network node 516, or a wireless device 531, 532.

The second node 512 comprises an **obtaining circuit 1101** configured to obtain a configured pattern-based guard band 600, the pattern-based guard band 600 comprising a pattern, the pattern comprising at least a first set of time resources 630 and a second set of time resources 640, wherein the first set of time resources 630 is associated with a first guard band configuration 610 and the second set of time resources 640 is associated with one of: no guard band configuration and a second guard band configuration 620, wherein the second guard band configuration 620 is different from the first guard band configuration 610, wherein the pattern-based guard band 600 is configured by a first node 511 adapted to be comprised in the wireless communications network 500.

In some embodiments, the guard band 600 may comprise at least one of: an unused spectrum and spectrum with restricted operation.

In some embodiments, at least one of the first set of time resources 630 and the second set of time resources 640 may comprise at least one of: a time slot, a subframe and a radio frame.

In some embodiments, the pattern may be associated with at least one of: a DownLink, DL, or UpLink, UL, transmission, a duplex configuration in aggressor or victim, a UL-DL Time Division Duplex configuration, a transmit activity pattern in an aggressor or a victim, a receive pattern in a victim, and a specific signal of a victim or an aggressor.

In some embodiments, the pattern may further comprise information on at least one of: pattern length, frequency information of an aggressor, multi-level pattern sequence, time unit and granularity of pattern sequence, pattern repetition type, periodicity or repetition period, reference time point from where a sequence is calculated or derived, starting time point from when the pattern applies, ending time point until which the pattern applies, duration of pattern, modification time, starting condition, ending condition, modification condition, transmit power level in aggressor system, direction of applicability of guard band pattern, and location information where guard band pattern is applied.

In some embodiments, the obtaining 1101 circuit may be further configured to receive a configuration from the first node 511.

In some embodiments, the obtaining 1101 circuit may be further configured to obtain information related to the pattern-based guard band 600 from at least one of: the first node 511, measurements or sensing radio signals or total interferences, a wireless device 531, 532, a network node 514, 515, 516, an aggressor node, the third node 513, a node serving the second node 512, a pre-defined rule, and a configuration.

The second node 512 comprises a **configuring circuit 1102** configured to adaptively configure one more actions in response to the obtained pattern-based guard band 600.

In some embodiments, the one or more actions may comprise at least one of: selection of a carrier for operation, operation of a victim carrier, adaptation of a bandwidth of a victim carrier, performing load balancing or traffic adaptation to move traffic between different carriers, a reception, a transmission, and enabling low-interference measurement occasions.

In some of these embodiments, enabling low-interference measurement occasions may comprise configuring a restricted measurement pattern.

In some embodiments, the adaptation of a reception or a transmission may be performed one of: periodically, upon a request from another node, triggered by an event, triggered by a condition, upon configuration by the first node 511, upon expiration of a timer, and after certain time duration.

In some embodiments, the configuring 1102 circuit may be further configured to adaptively configure the pattern based on at least one of: time- and/or frequency-varying aggressor interference from an aggressor system, amount of impact on a victim system of different transmissions in the aggressor system, time- and/or frequency-varying victim signal receptions in the victim system, and sensitivity to the aggressor interference of different victim signal receptions in the victim system.

In some embodiments, the configuring 1102 circuit may be further configured to configure based on information regarding a capability of supporting guard band patterns of the second node 512 or a third node 513 adapted to be comprised in the wireless communications network 500.

In some embodiments, the configuring 1102 circuit may be further configured to configure at least one of: periodically, on a request from another node 512, 513, upon being triggered by an event, triggered by a condition, and upon expiry of a timer or after certain time duration.

In some embodiments, the configuring 1102 circuit may be further configured to adaptively configure so a requirement is met.

In some embodiments, the second node 512 may also comprise a **reporting circuit 903** configured to report a capability of handling, implementing or configuring, a guard band pattern to one of the first node 511 and the third node 513.

In some embodiments, the second node 512 may also comprise a **sending circuit 904** configured to send a request to the first node 511 to configure one or more guard band patterns.

In some embodiments, the sending 1104 circuit may be further configured to send information to the first node 511, the information enabling the configuring of the pattern-based guard band 600.

The embodiments herein for handling a pattern-based guard band 600 may be implemented through one or more processors, such as a **processing circuit 1105** in the second node 512 depicted in **Figure 11****,** together with computer program code for performing the functions and actions of the embodiments herein. The program code mentioned above may also be provided as a computer program product, for instance in the form of a data carrier carrying computer program code for performing the embodiments herein when being loaded into the in the second node 512. One such carrier may be in the form of a CD ROM disc. It may be however feasible with other data carriers such as a memory stick. The computer program code may furthermore be provided as pure program code on a server and downloaded to the second node 512.

The second node 512 may further comprise a **memory circuit 1106** comprising one or more memory units. The memory circuit 1106 may be arranged to be used to store data such as, the information obtained, configured, reported, or sent by the processing circuit 1105 in relation to applications to perform the methods herein when being executed in the second node 512. Memory circuit 1106 may be in communication with the processing circuit 1105. Any of the other information processed by the processing circuit 1105 may also be stored in the memory circuit 1106.

In some embodiments, information from the first or third nodes 511, 513 may be received through a **receiving port 1107.** In some embodiments, the receiving port 1107 may be, for example, connected to the one or more antennas in the second node 512. In other embodiments, the second node 512 may receive information from another structure in the wireless communications network 500 through the receiving port 1107. Since the receiving port 1107 may be in communication with the processing circuit 1105, the receiving port 1107 may then send the received information to the processing circuit 1105. The receiving port 1107 may also be configured to receive other information.

The information obtained, configured, reported, or sent by the processing circuit 1105 in relation to, the information related to the pattern-based guard band 600, may be stored in the memory circuit 1106 which, as stated earlier, may be in communication with the processing circuit 1105 and the receiving port 1107.

The processing circuit 1105 may be further configured to send or signal information, such as information on capability to handle the information related to the guard band, to the first node 511 or to the third node 513, through **a sending port 1108,** which may be in communication with the processing circuit 1105, and the memory circuit 1106.

Those skilled in the art will also appreciate that the obtaining circuit 1101, the configuring circuit 1102, the reporting circuit 1103 and the sending circuit 1104 described above may refer to a combination of analog and digital circuits, and/or one or more processors configured with software and/or firmware (e.g., stored in memory) that, when executed by the one or more processors such as the processing circuit 1105, perform as described above. One or more of these processors, as well as the other digital hardware, may be included in a single application-specific integrated circuit (ASIC), or several processors and various digital hardware may be distributed among several separate components, whether individually packaged or assembled into a system-on-α-chip (SoC).

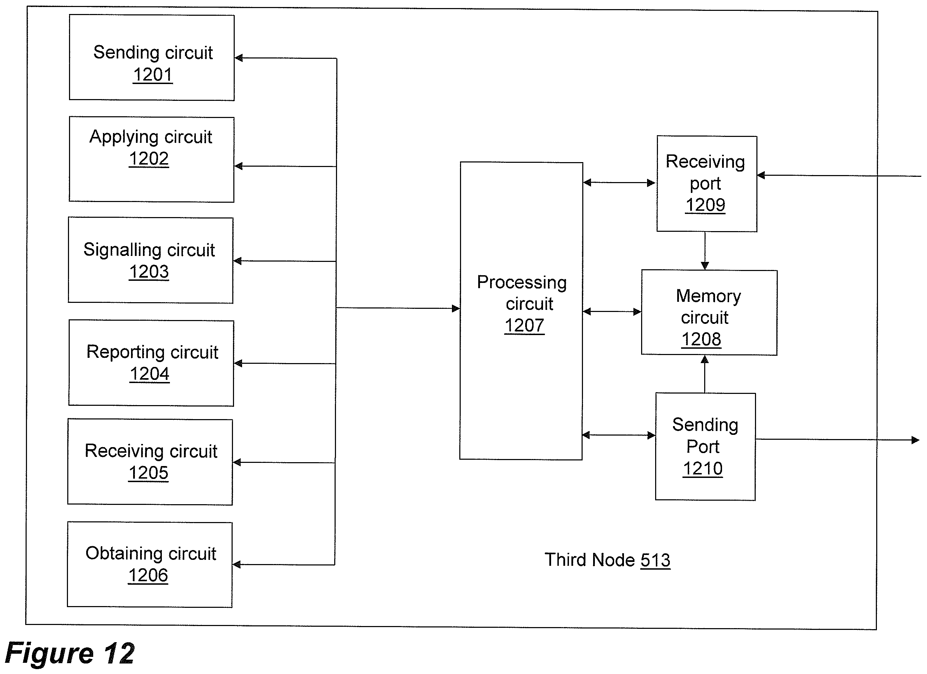

To perform the method actions in the third node 513 described above in relation to Figure 9 for handling a pattern-based guard band 600, the third node 513 comprises the following arrangement depicted in **Figure 12****.** The third node 513 is adapted to be comprised in the wireless communications network 500.

In some embodiments, the third node 513 may be one of an aggressor system and a victim system.

The detailed description of some of the following corresponds to the same references provided above, in relation to the actions described for the first node 511, and will thus not be repeated here. For example, further detailed information of the pattern-based guard band is provided below under the heading "Pattern-Based Guard Bands".

Any of the first node 511, the second node 512 or the third node 513 is one of: a first radio node 514, a second radio node 515, a network node 516, or a wireless device 531, 532.

The third node 513 comprises an **sending circuit 1201** configured to send a request to a first node 511 adapted to be comprised in the wireless communications network 500, to configure a pattern-based guard band 600, the pattern-based guard band 600 comprising a pattern, the pattern comprising at least a first set of time resources 630 and a second set of time resources 640 wherein the first set of time resources 630 is associated with a first guard band configuration 610 and the second set of time resources 640 is associated with one of: no guard band configuration and a second guard band configuration 620, wherein the second guard band configuration 620 is different from the first guard band configuration 610.

In some embodiments, the guard band 600 may comprise at least one of: an unused spectrum and spectrum with restricted operation.

In some embodiments, at least one of the first set of time resources 630 and the second set of time resources 640 may comprise at least one of: a time slot, a subframe and a radio frame.

In some embodiments, the pattern may be associated with at least one of: a DownLink, DL, or UpLink, UL, transmission, a duplex configuration in aggressor or victim, a UL-DL Time Division Duplex configuration, a transmit activity pattern in an aggressor or a victim, a receive pattern in a victim, and a specific signal of a victim or an aggressor.

In some embodiments, the pattern may further comprise information on at least one of: pattern length, frequency information of an aggressor, multi-level pattern sequence, time unit and granularity of pattern sequence, pattern repetition type, periodicity or repetition period, reference time point from where a sequence is calculated or derived, starting time point from when the pattern applies, ending time point until which the pattern applies, duration of pattern, modification time, starting condition, ending condition, modification condition, transmit power level in aggressor system, direction of applicability of guard band pattern, and location information where guard band pattern is applied.

In some embodiments, the sending circuit 1201 may be further configured to send information to the first node 511, the information enabling the configuring of the pattern-based guard band 600.

In some embodiments, the third node 513 may also comprise an **applying circuit 1202** configured to apply the configured pattern-based guard band 600.

In some embodiments, the third node 513 may also comprise a **signalling circuit 1203** configured to signal the configured pattern-based guard band 600 to a second node 512 adapted to be comprised in the wireless communication network 500.

In some embodiments, the third node 513 may also comprise a **reporting circuit 1304** configured to report a capability of handling, implementing or configuring, a guard band pattern to one of the second node 512 and the first node 511 adapted to be comprised in the wireless communications network 500.

In some embodiments, the third node 513 may also comprise a **receiving circuit 1205** configured to receive a configuration from the first node 511 to adapt at least one of transmission and reception to the configured pattern-based guard band 600.

In some embodiments, the third node 513 may also comprise an **obtaining circuit 1206** configured to obtain information related to the pattern-based guard band 600 from at least one of: the first node 511, measurements or sensing radio signals or total interferences, a wireless device 531, 532, a network node 514, 515, 516, an aggressor node, the third node 513, a node serving the second node 512, a pre-defined rule, and a configuration.

The embodiments herein for handling a pattern-based guard band 600 may be implemented through one or more processors, such as a **processing circuit 1207** in the third node 513 depicted in **Figure 10****,** together with computer program code for performing the functions and actions of the embodiments herein. The program code mentioned above may also be provided as a computer program product, for instance in the form of a data carrier carrying computer program code for performing the embodiments herein when being loaded into the in the third node 513. One such carrier may be in the form of a CD ROM disc. It may be however feasible with other data carriers such as a memory stick. The computer program code may furthermore be provided as pure program code on a server and downloaded to the third node 513.

The third node 513 may further comprise a **memory circuit 1208** comprising one or more memory units. The memory circuit 1208 may be arranged to be used to store data such as, the information requested, received, sent, or adapted by the processing circuit 1207 in relation to applications to perform the methods herein when being executed in the third node 513. Memory circuit 1208 may be in communication with the processing circuit 1207. Any of the other information processed by the processing circuit 1207 may also be stored in the memory circuit 1208.

In some embodiments, information from the first or second nodes 511, 512 may be received through a **receiving port 1209.** In other embodiments, the third node 513 may receive information from another structure in the wireless communications network 500 through the receiving port 1209. Since the receiving port 1209 may be in communication with the processing circuit 1207, the receiving port 1209 may then send the received information to the processing circuit 1207. The receiving port 1209 may also be configured to receive other information.

The information sent, applied, signalled, reported, received, and obtained by the processing circuit 1207 in relation to, the information related to the pattern-based guard band 600, may be stored in the memory circuit 1208 which, as stated earlier, may be in communication with the processing circuit 1207 and the receiving port 1209.

The processing circuit 1207 may be further configured to send or signal information, such as information on capability to handle the information related to the guard band, to the first node 511 or to the second node 512, through **a sending port 1210,** which may be in communication with the processing circuit 1207, and the memory circuit 1208.

Those skilled in the art will also appreciate that the sending circuit 1201, the applying circuit 1202, the signalling circuit 1203, the reporting circuit 1304, the receiving circuit 1205 and the obtaining circuit 1206 described above may refer to a combination of analog and digital circuits, and/or one or more processors configured with software and/or firmware (e.g., stored in memory) that, when executed by the one or more processors such as the processing circuit 1207, perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

When using the word "comprise" or "comprising" it shall be interpreted as non-limiting, i.e. meaning "consist at least of".

The embodiments herein are not limited to the above described preferred embodiments. Various alternatives, modifications and equivalents may be used. Therefore, the above embodiments should not be taken as limiting the scope of the invention, which is defined by the appending claims.

According to some embodiments discussed herein, methods in a node, such as the first node 511, of an aggressor system may configure at least one pattern-based guard band, such as pattern-based guard band 600, which includes at least a *pattern sequence* and a *guard band* used in the aggressor system, a victim system, such as the second node 512, or both the aggressor and victim systems. Moreover, the pattern-based guard band, such as pattern-based guard band 600, may be used to mitigate fully and/or partly interference due to the aggressor system's unwanted emissions into the operating carrier frequency of a victim system. The configuration in an aggressor node, such as the first node 511, may be based on:
(1) A pre-defined set of parameters, rules, etc. associated with pattern-based guard bands, such as pattern-based guard band 600; and/or
(2) Received information from another node, such as the second node 512 or the third node 513, or a U E, such as the first wireless device 531 or the second wireless device 532.

According to some other embodiments, methods in a node or UE of a victim system, such as the second node 512, may adaptively configure signal transmissions and/or receptions responsive to a pattern-based guard band, such as pattern-based guard band 600, used in the corresponding aggressor system, such as the first node 511. The configuration in a victim node such as the second node 512, may be based on:
(1) A pre-defined set of parameters, rules, etc. associated with signal transmissions and/or receptions responsive to a pattern-based guard band, such as pattern-based guard band 600; and/or
(2) Received information from another node, such as the second node 512 or the third node 513, or a UE, such as the first wireless device 531 or the second wireless device 532.

According to some other embodiment, methods in a node or UE of an aggressor system, such as the first node 511, may include reporting a capability (of the node or UE, such as the first node 511, of the aggressor system) of handling and implementing to another node, such as the second node 512 or the third node 513, (e.g., a serving node, a neighboring node, etc.), which reporting is performed proactively or based on a request from another node, such as the second node 512 or the third node 513.

According to still other embodiments, methods in a node or UE of an aggressor system, such as the first node 511, may include reporting a capability (of the node or UE, such as the first node 511, of the aggressor system) in terms of *'handling, implementing or configuring a guard band pattern'* to another node, such as the second node 512 or the third node 513, (e.g., a serving node, a neighboring node, etc.), which reporting is performed proactively or based on a request from another node.

According to yet other embodiments, methods in a node or UE, such as the second node 512 or the third node 513, of a victim system may include reporting a capability (of the node or UE of the victim system) in terms of *'handling, implementing or configuring a pattern based signal transmission and*/*or reception in a victim system responsive to a aggressor node's guard band pattern'* to another node, such as the first node 511, the second node 512 or the third node 513, (e.g., serving node, neighboring node, etc.), which reporting is performed proactively or based on a request from another node, such as the first node 511, the second node 512 or the third node 513.

### Generalizations

Definitions explained in sections below may apply to any embodiment described in the current specification, including the Detailed Description herein, as well as in the associated Claims, Figures and Summary sections.

As used herein, a wireless communications system, such as wireless communications network 500, refers to any system capable of sending and/or receiving wireless signals (e.g., a cellular, radio, or/or satellite system). In a co-existence scenario, a wireless communications system may be a victim or an aggressor system. A victim or an aggressor system may include all or a subset of radio nodes of a radio network. In another example, a victim or an aggressor system may include all or a subset of UEs communicating with the respective radio network. In yet another example, an LTE network may be regarded as a victim system including an eNodeB (also referred to as a base station), LTE UE, and other nodes, and an HSPA network may be regarded as an aggressor system including NodeBs, RNCs, HSPA UEs, etc. Any reference to a wireless communications system herein, is to be understood to apply to wireless communications network 500.

A guard band as used herein may alternatively be referred to as a protection band. A guard band may be configured statically, semi-statically, or dynamically. In the description that follows, a guard band is used indistinctively as a pattern-based guard band, such as pattern-based guard band 600. Any reference in the description below to a guard band or a pattern-based guard band is to be understood to apply as well to pattern-based guard band 600.

The terms wireless terminal/device, such as the first wireless device 531 and the second wireless device 532, and UE may be used interchangeably in the following description. Any reference to a wireless device (or UE) herein, is to be understood to apply to any of the first wireless device 531 and the second wireless device 532. A UE may include any device equipped with a radio interface that is capable of at least generating and transmitting a radio signal to a radio network node. Note that even some radio network nodes (e.g., a femto B, also referred to as a home BS) may also be equipped with a UE-like interface.

A radio network node herein, such as the first radio node 514 and the second radio node 515 depicted in Figures 5a-d, may include a radio node operating or at least transmitting RF signals to a UE or performing UL measurements in one or more frequencies, carrier frequencies, and/or frequency bands. Any reference to a radio network node herein, is to be understood to apply to any of the first radio node 514 and the second radio node 515. More particularly, the radio node may be capable of CA (carrier aggregation), and it may also be a single-RAT (single Radio Access Technology) or multi-RAT (multi RAT) or multi-standard node (e.g., using the same or different base band modules for different RATs). Some examples of radio nodes include: a radio base station (e.g., an LTE eNodeB); a measurement unit performing measurements on UL signals (e.g., a Location Measurement Unit (LMU) or location measurement unit that is used for positioning) and/or DL signals; a radio node transmitting DL signals (e.g., a beacon device); and/or UL signals, relays, mobile relays, repeaters, sensors, etc.

Typically, a radio node may have an associated cell, such as the first cell 521 and the second cell 522, or may create one or more of its own cells. A radio node, however, may also be a radio node which does not create its own cell (e.g., a measurement unit or a node receiving signals such as a relay or repeater). The radio node may also be a radio node (e.g., eNodeB, RRU, relay, etc.) sharing the cell Identifier (ID) with another radio node (e.g., an eNodeB, RRU, relay, etc.).

Any reference to a radio node herein, is to be understood to apply to any of the first wireless device 531, the second wireless device 532, the first radio node 514 and the second radio node 515, unless otherwise noted.

A cell serving a UE is the serving cell for that UE. Multiple serving cells are possible with carrier aggregation, so "a serving cell" may be, in general, used throughout the present specification for CA and non-CA systems. With CA, a primary cell (PCell) is one example of a serving cell, and another example is a secondary cell (SCell).

As used herein, the terms "centralized network management node" and "coordinating node" refer to network node, such as the network node 516 depicted in Figures 5a-d, which may also be a radio network node, which coordinates radio resources with one or more radio network nodes and/or UEs. Some examples of a coordinating node include a network monitoring and configuration node, an OSS (operation and support system) node, O&M (operation and maintenance) node, MDT (Minimization of Drive Tests) node, SON (Semantic Overlay Network) node, positioning node, a gateway node (e.g., a Packet Data Network Gateway or P-GW), or Serving Gateway (S-GW) network node, or a femto gateway node, a macro node coordinating smaller radio nodes associated with it, etc.

A network node used herein, such as the first radio node 514, the second radio node 515, and the network node 516 depicted in Figures 5a-d, may refer to a radio node (as described above, such as the first radio node 514 and the second radio node 515 depicted in Figures 5a-d, and such as the first wireless device 531 and the second wireless device 532 depicted in Figures 5a-d), a radio network node in general (e.g., RNC or radio network controller), a core network node, or any node in the network such as a positioning node (e.g., an E-SMLC also referred to as a Serving Mobile Location Center, or an SLC), MDT node, O&M, SON node, a gateway node, MME (Mobility Management Node), any coordinating node, such as the network node 516 depicted in Figures 5a-d, etc. Any reference to a network node herein, is to be understood to apply to any of the first wireless device 531, the second wireless device 531, the first radio node 514, the second radio node 515, and the network node 516, unless otherwise noted.

A network node or a UE or wireless device, as described above, are commonly referred to as a node.

Any reference to a third node, such as the third node 513, herein, is to be understood to apply to the third node 513, unless otherwise noted.

The term signaling described herein is either via direct links or logical links (e.g., via higher layer protocols and/or via one or more network nodes, radio nodes, and/or UEs). The term signaling may mean signaling via radio links and/or fixed connection. For example, signaling from a coordinating node may pass another network node, e.g., a radio node. The signaling from one radio node to another radio node may also include signaling via user equipment or another radio node or another network node.

Embodiments of the present invention discussed herein are not limited to LTE. An aggressor and/or a victim system may be a cellular network system, a satellite system (e.g., Global Positioning System (GPS), Global Navigation Satellite System (GNSS), etc.), an ad hoc network, a sensor network, or any wireless communications in general. A wireless communications system may also include any Radio Access Network (RAN), either single-RAT or multi-RAT. A RAT may include LTE, LTE-Advanced, UMTS, GSM, Code Division Multiple Access 2000 (cdma2000), Worldwide Interoperability for Microwave Access (WiMAX), and/or WiFi.

Embodiments (sections) described herein may be considered as independent embodiments or may be considered in any combination with each other to describe non-limiting examples of the current invention.

### First Embodiments

**Pattern-Based Guard Bands** (Pattern-Based Guard Band embodiments may also use, fully or in parts, embodiments described in other sections and/or elements thereof.)

According to some **embodiments** presented herein, dynamic guard band configuration follows a certain pattern indicating time resources (e.g., subframes in LTE), frequency resources (e.g., subbands), or both time and frequency resources. The guard band may be configured in an aggressor system, in a victim system, or in both aggressor and victim systems (e.g., shared in a way that both systems configure a part, e.g., in frequency and/or in time, of the guard band, and this sharing may be based e.g. on operators agreement).

A purpose of the guard band is to protect the victim system from unwanted emissions (e.g., out-of-band emissions or spurious emissions such as harmonics) generated by the frequencies used by the aggressor system into the frequencies used by the receiver of the victim system. Both aggressor and victim systems operate using different carrier frequencies, typically in adjacent or closely located carriers.

The guard band pattern may be: pre-defined (e.g., by requirements or certain rules); statically, semi-statically, or dynamically configured; and/or received from another node. The guard band pattern may be adaptively configured to account for any one or more of:
(1) Time-varying and/or frequency-varying aggressor interference from the aggressor system (e.g., configuring a guard band when high interference is expected from the aggressor system);
(2) The amount of impact on a victim system of different transmissions in the aggressor system (e.g., different signals or different channels may have relatively lower or relatively higher impact);
(3) Time- and/or frequency-varying victim signal receptions in the victim system; and/or
(4) Sensitivity to the aggressor interference of different victim signal receptions in the victim system (e.g., some received signals such as signals received at very low power may be more sensitive to the aggressor interference, and some examples of such signals are weak neighbor cell signals from distant sites or GPS signals measured for positioning purposes).

Some examples of an aggressor system include a radar system, a GNSS (Global Navigation Satellite System), a cellular system, a WiFi system, etc. Some examples of a victim system include a satellite system, a radar system, a cellular system, a WiFi system, etc. The pattern may be configured for downlink transmissions, for uplink transmissions, or for both downlink and uplink transmissions. Some examples of pattern-based guard bands are shown in Figures 6a, 6b, and 6c, as mentioned earlier. Although the guard bands are configured in the aggressor system bandwidth in embodiments illustrated in Figures 6a-c, guard bands may also/alternatively be configured, at least in part, in the victim system.

### Information Related To Guard Band Patterns

Some examples of general pattern characteristics include: pattern sequence (e.g., a string of bits); pattern length (e.g., the bit string length); pattern periodicity (may be the same as or different from pattern length); reference time point from where the pattern shall be calculated (e.g., subframe #0 of SFN 0 of a reference cell); and/or applicability time point (e.g., from a specific time or immediately upon receiving). A guard band pattern may be described, for example, using: a pattern sequence indicative of signal transmission or activity levels; and/or minimum information associated with the guard band used in the frequency(ies) over which the aggressor system operates to protect the frequency(ies) over which the victim system operates.

The pattern may also include additional parameters and more detailed information. Examples of such parameters and detailed information include: frequency information of the aggressor system; pattern sequence; pattern repetition type; periodicity or repetition period; reference time point from where the sequence is calculated or derived; starting time point from when the pattern applies; ending time point until which the pattern applies; duration of the pattern (e.g., a total time period over which the pattern applies); modification time; starting condition; ending condition; modification condition; transmit power level in aggressor system; direction of applicability of guard band pattern; and/or location information where guard band pattern is applied. These parameters are discussed in greater detail below.

Frequency information of aggressor system may include one or more of the following:
(1) Carrier frequency, component carrier frequency or range of frequencies over which a guard band pattern(s) is applied, such as an ARFCN (Absolute RF Channel Number) number or range of ARFNC numbers of carriers;
(2) Bandwidth type of guard band in a pattern, which may be a homogeneous bandwidth type with a same guard band over the entire pattern sequence (e.g., always 5 MHz), or a heterogeneous bandwidth type where a guard band varies at least twice in a pattern sequence (e.g., 5 MHz in first and last sets of resources and 10 MHz on the remaining sets of resources);
(3) Bandwidth(s) of a guard band(s) (e.g., one bandwidth value if the guard band is homogeneous or more than one bandwidth value if the guard band is heterogeneous);
(4) Frequency band indicator(s) of frequency band(s) in which a guard band pattern(s) shall apply; and/or
(5) Duplex mode of aggressor system, such as, TDD (Time Division Duplex), FDD (Frequency Division Duplex), HD-FDD (Half Duplex FDD), and/or variable duplex FDD.

A pattern sequence may define subframes and/or radio frames where guard bands are and are not applied. For example, '0101' may indicate different subframe or radio frames where '0' means no guard band in the indicated period, and '1' means use a guard band in the indicated period. The pattern sequence may be determined autonomously by the aggressor system, may be pre-defined by a requirement or defined according to a rule, may be pre-configured by the network operator or a computer program, may be determined based on the information about the victim system, etc. Multiple pattern sequences may exist, for example, associated with different times, time and/or frequency resources, conditions, triggering events, frequencies, etc. Multi-level pattern sequences may exist, for example, '029021...' where '0' may indicate no band, '1' may indicate a first transmission level or activity level, and '2' may indicate a second transmission level or activity level. A time unit and granularity of a pattern sequence(s) may be defined as follows:
(1) A time unit and granularity can be pre-defined or signaled to the aggressor radio node (e.g., each bit in a sequence can be pre-defined in terms of subframes, multiple of subframes, frame, multiple of frames etc.);
(2) A time unit and granularity can be the same as a time unit of the victim system (e.g., a subframe in LTE) or it may be the same as a time unit of the aggressor system (e.g., a radio frame in UMTS), or it may be simply a time period (e.g., a pattern consisting of a sequence of units of 10 ms);
(3) A homogeneous time unit may mean that a same time unit applies to all the elements of the pattern sequence (e.g. each bit is expressed in terms of frame); and
(4) A heterogeneous time unit may mean that different time units apply to at least two elements of the pattern sequence, for example, so that one frame applies when a guard band is applied (i.e. one frame corresponding to '1') and 5 frames are applied when no guard band (i.e. five frames corresponding to '0') is applied by the aggressor radio node.

A pattern repetition type may be periodic or aperiodic. With a periodic repetition type, the pattern repeats after a period over which the pattern sequence is defined. With an aperiodic repetition type, one or more characteristics of the guard band pattern may change after a duration over which a pattern sequence is defined. In one example, at certain times the pattern sequence 101010 may change to a pattern sequence 1000100. In another example, the pattern sequence 101010 may be triggered based on a condition (e.g. transmit power in aggressor system exceeds a threshold) and may stops after one repetition.

The pattern, which may be periodic or aperiodic, may autonomously change after a pre-defined or configurable modification time period. The modification time may include multiple periodic or aperiodic pattern durations. For example, two periodic patterns (10101010 and 9010010) can be configured at the aggressor radio node. The configured periodic pattern, 10101010, for example, may be changed by the aggressor radio node to 9010010 after a modification time period of 5 seconds.

With a starting condition, a pattern may start when one or more conditions are met (e.g., if output power of the aggressor radio node exceeds a threshold and/or traffic intensity is above a threshold, etc.). With an ending condition, a pattern may stop when one or more condition is met (e.g., if output power of the aggressor radio node falls below a threshold and/or traffic intensity is below a threshold etc.).

With a modification condition, the pattern (which may be periodic or aperiodic) may autonomously change after a pre-defined or configurable condition is met. For example, two periodic patterns (10101010 and 9010010) can be configured, and the configured periodic pattern, 10101010, may be changed by the aggressor radio node to 9010010 provided the output power of an aggressor radio node falls below a threshold and/or traffic intensity falls below a threshold, etc.

Considering a transmit power level in the aggressor system, for example, no power during a guard period and normal power otherwise in the aggressor system may be represented by on/off signaling, and/or reduced power during a guard period and normal power otherwise in the aggressor system may be represented by a certain transmit power offset with respect to power of a certain signal.

Considering direction of applicability of guard band pattern, for example, a pattern may apply to transmission on an UL carrier frequency in FDD or HD-FDD or on a DL carrier frequency in FDD or HD-FDD or both, and/or a pattern may apply to UL transmission or DL transmission or both in TDD.

Considering location information where guard band pattern is applied, for example, a guard band pattern may be applied by an aggressor system (e.g., a BS or UE) only if located in a certain area or region as indicated by location information or an area indicator (e.g., tracking area ID, location area ID, a set of cell IDs, etc.), and/or a guard band pattern may be applied by an aggressor system (e.g., a BS or UE) provided aggressor and victim systems are within a certain area or region or distance (e.g., if an inter-site distance between the aggressor and victim base stations is less than 1 km or the path loss is above a threshold).

The guard band pattern may also be associated, e.g., with any of the following: DL and/or UL transmissions; duplex configuration in aggressor or victim (e.g., TDD, FDD, HD-FDD, variable duplex); UL-DL TDD configuration (e.g., TDD UL-DL subframe configuration, TDD special subframe configuration, etc.); transmit activity pattern in the aggressor or victim system/node; receive patterns in the victim system/node; and/or a specific signal(s) of the victim and/or aggressor system(s)/node(s).

A transmit activity pattern in the aggressor and/or victim system/node may be used so that a guard band pattern associated with a transmit pattern of the aggressor follows exactly or partially a transmit activity pattern in aggressor system (e.g., a guard band is configured in time periods when activity exceeds a certain amount). In addition or in an alternative, a guard band pattern associated with a transmit pattern of the victim may follow exactly or partially a transmit activity pattern in the victim system/node (e.g., a guard band is configured in time occasions when victim system UEs are transmitting and the UL transmissions need protection).

Receive patterns in a victim system/node may be used so that a guard band pattern associated with a receive pattern may follows exactly or partially a receive activity pattern in the victim system/node (e.g., a guard band may be configured at time occasions when receiving weak signals is expected). Using specific signal of a victim system/node, for example, the guard band may be designed to protect a specific signal or channel type(s) in the victim system/node. Using specific signal of an aggressor, for example, the guard band may be designed to protect from a specific signal or channel type(s) transmitted in the aggressor system.

### UE and Network Node Capabilities Related to Guard Band Patterns

All UEs and radio network nodes may or may not be capable of handling, configuring, and/or implementing guard band patterns. Some examples of radio network nodes include eNodeBs, Node B's, base stations, relays, access points, LMUs (Location Measurement Units), etc. For example, all UEs and radio nodes may not be capable of dynamically or semi-statically creating a guard band pattern based on received information or based on pre-defined rules. Alternatively, a UE or a radio node may be capable of handling certain type(s) and/or characteristic(s) of guard band pattern capability.

A UE may thus indicate its capability in terms of handling the guard band pattern and associated configuration information for creation of a pattern based guard band to a network node (e.g., a serving network node, a positioning node, a core network node, etc.) or to another UE (e.g., to support a device to device, D2D, operation mode). Similarly, a radio node may indicate its capability in terms of handling the guard band pattern and associated configuration information for creation of a pattern-based guard band to another network node (e.g., a neighboring network node, a positioning node, a coordinating node, a relay node, a core network node, etc.)

In general, a UE or a radio node may signal its 'pattern based guard band handling' capability to the relevant target network node or UE indicating that it is capable of creating a guard band pattern according to the received instructions and/or when one or more pre-defined rules or conditions are fulfilled. The guard band capability information may also include additional information. Examples of guard band pattern supporting capability are described in greater detail below.
(1) In one example, a UE or a radio node may not be capable of handling any guard band pattern related configuration information described in the previous section (entitled "INFORMATION RELATED TO GUARD BAND PATTERNS").
(2) In another example, a UE or a radio node may be capable of handling only partial or a subset of the guard band pattern related configuration information described above. For example, a UE or a radio node may be capable of creating an aperiodic guard band pattern (e.g., configuring the pattern only once upon a triggering condition) with no transmission (i.e., 0 watt power). Yet another UE or a radio node may be capable of creating guard band pattern only periodically or aperiodically with no transmission or with low power transmission.
(3) In another example, a UE or a radio node may be capable of handling a guard band pattern(s) for a certain frequency band(s) and/or co-existence scenario, such as a duplex mode, etc.
(4) In another example, a UE or a radio node may be capable of handling a guard band(s) based on the location or geographical area information (see the section above entitled "INFORMATION RELATED TO GUARD BAND PATTERNS").
(5) In yet another example, a UE or a radio node may be fully capable of handling all the guard band pattern(s) related configuration information described above.
(6) In yet another example, a UE or a radio node may be capable of handling the guard band pattern related to a specific signal type (e.g., GPS signals, radar signals, etc.).
(7) In yet another example, a UE or a radio node may indicate the number of guard band patterns which they can activate or operate in parallel. It may also indicate additional information such as carrier frequency range and/or supported bands for parallel operation. For example, a UE may indicate that it can create 2 guard band patterns: one on band A and another one on band B when operating in multi-carrier, CoMP, etc. Multiple guard band patterns may also be supported (e.g., to protect different signals). Multiple guard band patterns may be associated with different pattern sequences, or may also be used in the same band. The multiple patterns may have at least one different characteristic.

### Method of Signaling Means and Nodes Involved in Communication of the Information Related to Pattern-Based Guard Bands

Information related to pattern-based guard bands may include any one or a combination of: information related to guard band pattern described in the section above entitled "INFORMATION RELATED TO GUARD BAND PATTERNS"; information enabling configuring a pattern-based guard band (e.g., a transmit or receive pattern of the victim or a transmit pattern of the aggressor); information related to UE and network node capabilities of supporting guard band patterns; and/or indication of activation/deactivation or using a pattern-based guard band. Any information related to pattern-based guard bands may be signaled in either direction between: UE and a network node (e.g., a radio network node or a core network node); two UEs; and/or two network nodes (e.g., where any of the two network nodes may be a radio network node or a core network node, or where two network nodes are core network nodes, each of which may be a positioning node, a coordinating node, and/or an O&M node).

In the disclosure provided above, the network node may also be a radio network node serving and/or controlling the victim UE or the aggressor UE. The information may be signaled as uncast, multicast, and/or broadcast, and the information may be signaled via higher-layer signaling and/or lower layer signaling.

The information may be signaled to one or more of aggressors (nodes or UE) or in general to a third node or UE to enable the aggressor to configure the pattern-based guard band and adapt its transmission activity accordingly. The information may be signaled by a victim, another aggressor, or a third node. The information may be signaled to one or more of victims (nodes or UE) or in general to a third node or UE to enable the victim to adapt victim's transmission and/or receiving accordingly. The information may be signaled by an aggressor, another victim, or a third node.

As disclosed earlier in the present specification, the pattern-based guard band may be configured in the aggressor and/or victim band.

A victim network node may also send a request to an aggressor UE or an aggressor radio network node to configure one or more guard band patterns. The configuration request may also be sent by a third node which neither belongs to a victim or to an aggressor system (e.g., a coordinating node in a core network). The request may also include partial or full information described in the section entitled INFORMATION RELATED TO GUARD BAND PATTERNS. Alternatively, if only a request indication is sent, then the victim UE or network node may use pre-defined information associated with the guard band pattern. The victim UE or radio node may use a combination of signaled information and pre-defined information when configuring the guard band pattern(s).

A victim system or a third node sending a request to the aggressor system to configure the guard band pattern may also provide information enabling configuration of the pattern-based guard band. Such information may include frequency-related information used in the victim system. Such information may also provide information related to signal activity used in the victim system. This may assist the aggressor system (UE or a radio node) to create the guard band pattern(s), which may be orthogonal or quasi-orthogonal. Examples of frequency information and signal transmit patterns used in a victim system may include frequency information of the victim system and/or a signal activity pattern using in the victim system. Frequency information of victim system, for example, may include one or more of:
(1) a carrier frequency or range of frequencies, which are to be protected from the aggressor system (e.g., an ARFCN number or range of ARFCN numbers of carriers to be protected);
(2) channel bandwidth(s) of carrier(s);
(3) measurement bandwidth(s) on the carriers;
(4) a frequency band indicator(s) of a frequency band(s) which needs to be protected from the aggressor system; and/or
(5) duplex mode of the victim system (e.g., TDD, FDD, HD-FDD, variable duplex FDD).

A signal activity pattern used in the victim system may include information such as timing and/or pattern sequences of any one or more of: a pattern used in DL, a pattern used in UL, a signal transmit pattern, and/or a signal receive pattern.

### Second Embodiments

### Methods in a Node of an Aggressor System to Configure Pattern-Based Guard Bands (Aggressor system node embodiments may also use, fully or in parts, embodiments described in other sections and/or elements thereof.)

A network node or a UE (commonly referred to as a node) may configure a pattern-based guard band (such as a pattern-based guard band described above with respect to First Embodiments of pattern-based guard bands) periodically, responsive to a request from another node or UE (e.g., a request from a victim system or a third node), responsive to an event trigger (e.g., determining a potential victim node or a need to perform certain measurements that may potentially suffer from the aggressor interference), and/or responsive to a condition trigger (e.g., related to interference or performance estimation).

A pattern-based guard band may be configured based on a pre-defined rule, autonomously (e.g., based on own measurements and the available information), based on the information received from a UE or network node (e.g., an eNodeB and/or coordinating node) such as described above in the section entitled "METHODS OF SIGNALING MEANS AND NODES INVOLVED IN COMMUNICATION OF THE INFORMATION RELATED TO PATTERN-BASED GUARD BANDS," or a combination thereof.

The configured pattern-based guard band may be applied by the configuring node (e.g., the aggressor node) or the configuring node (e.g., a coordinating node or another aggressor node) may signal the configured pattern information to another network node or UE which would apply the configured pattern. Here, and also in some other embodiments discussed herein, a node may also mean a radio node or UE.

A victim node may further adapt its transmissions (e.g., scheduling, transmit patterns such as ABS pattern, DTX), and/or reception (e.g., measurement pattern configured by eNodeB of the victim LTE system for its LTE UE receiving in DL while protecting it from radar transmissions, DRX, etc.), or the victim node be configured to do so to the configured pattern-based guard band.

### Third Embodiments

### Methods in a Node of a UE of a Victim System to Adaptivelly Configure Transmissions and/or Receptions Responsive to a Pattern-Based Guard Band (Victim System UE embodiments may also use, fully or in parts, embodiments described in other sections and/or elements thereof.)

According to third embodiments, the UE or the network node may obtain information about a pattern-based guard band (see sections relating to First Embodiments), and the information may be obtained, for example: using measurements or sensing radio signals or total interferences; from another UE or network node; from an aggressor node or a third node; from the serving node; and/or using a pre-defined rule or by configuration.

The node (e.g., a victim node, a coordinating node, or a serving node) or UE in a victim system may perform one or more actions while taking into account the guard band pattern used in an aggressor system. Examples of such actions include: selection of the carriers for operation of victim and non-victim devices/nodes/systems to accommodate a required or target traffic load in a system; operation of victim carriers or normal operation during a time period(s) when the aggressor system creates a guard band; and/or adaptation of the bandwidth of victim carriers (e.g., measurement bandwidth) depending upon guard band bandwidth. Adaptation of the bandwidth of victim carriers depending on guard band bandwidth may include:
(1) configuring a measurement bandwidth(s) responsive to the pattern-based guard band (e.g., up to a channel bandwidth if the aggressor guard band is sufficient or smaller than the channel bandwidth or a reference bandwidth if the aggressor guard band is not sufficient) where the configured measurement bandwidth may also be adaptively used when aggressor interference is expected or at time occasions when guard bands are configured;
(2) configuring a measurement bandwidth(s) when the guard bands are not used (e.g., up to channel bandwidth if no aggressor interference is expected); and/or
(3) Changing the measurement bandwidth to be different at time occasions when the pattern-based guard band is used in the aggressor system and when the guard band is not used in the aggressor system.

Further examples of actions performed while taking into account the guard band pattern used in an aggressor system may include:
(1) Performing load balancing or traffic adaptation to move traffic between different carriers depending upon traffic characteristics etc. For example, high data rate traffic may be moved to a non-victim carrier and/or time instances protected by the pattern-based guard band.
(2) Transmissions that may be adaptively configured responsive to the information about pattern-based guard band may include data scheduling, physical signal transmissions, control channel transmissions, low-interference subframe pattern receive pattern or ABS pattern configuration in the victim node, transmit activity pattern or states in the victim node, etc.
(3) Reception that may be adaptively configured responsive to the information about pattern-based guard band may include receiving data channels, control channels, system information, physical signals, receive or measurement pattern, receive activity states such as DRX, etc.
(4) Adaption for transmissions by and/or receptions at the victim node may even be performed using a pattern based approach. More specifically, the victim system may transmit and//or receive signals according to a pattern which is orthogonal to the guard band pattern used in the corresponding aggressor system. Such a signal transmit/receive pattern in a victim system responsive to guard band based pattern used in an aggressor system may also include at least a pattern sequence and reduced/minimum information related to signal transmission/reception bandwidth. For example, assuming the aggressor system uses a guard band pattern of 1010101. In response, the victim system may transmit and/or receive signals using a pattern 0101010, which is fully orthogonal to the guard band pattern used in the aggressor system. In another example, if the victim system has lower activity or traffic, the aggressor and victim systems may use a guard band based pattern of 1010101 and a transmit/receive pattern of 100001, respectively.

The adaptation for transmissions by and/or receptions at a victim system/node may be performed, for example, periodically, upon a request from another node or UE, triggered by an event, triggered by a condition, in accordance with Embodiments 1 and/or 2, and/or upon expiration of a timer or after certain time duration (e.g., a timer value or a time duration can be pre-defined or configured by another node).

### UE and Network Node Capabilities Related to Pattern Based Signal Transmission and/or Reception

As described above, in response to pattern-based guard band, the victim system may transmit and/or receive signal also in the form of a pattern. But all UEs and radio network nodes may or may not be capable of handling and implementing pattern based signal transmission and/or reception pattern in general or in response to pattern-based guard band.

When acting as victim, for example, all UEs and radio nodes may not be capable of dynamically or semi-statically creating a pattern based signal transmission and/or reception based on received information or based on pre-defined rules. Alternatively, a UE or a radio node may be capable of handling a certain type(s) and/or characteristic(s) of pattern(s) based signal transmission and/or reception capability. Therefore a UE may indicate its capability in terms of handling pattern based signal transmission and/or reception and associated configuration information for creation of a pattern based signal transmission and/or reception to a network node (e.g. serving network node, a positioning node, a core network node, etc.) or to another UE (e.g., to support device to device or D2D operation mode). Similarly, a radio node may indicate its capability in terms of handling the pattern based signal transmission and/or reception and associated configuration information for creation of a pattern based signal transmission and/or reception to another network node (e.g., neighboring network node, positioning node, a coordinating node, relay node, core network node, etc.)

The remaining description and examples provided above in the section entitled "UE AND NETWORK NODE CAPABILITIES RELATED TO GUARD BAND PATTERNS" also apply for UE and radio node capability in terms of handling of the pattern based signal transmission and/or reception.

### Fourth Embodiments

### Using Pattern-Based Guard Bands to Enable Low-Interference Measurement Occasions (Co-Existence Enabled Elcic) (Embodiment using pattern-based guard bands to enable low-interference measurement occasions may also use, fully or partially, embodiments described in other sections and/or elements thereof.)

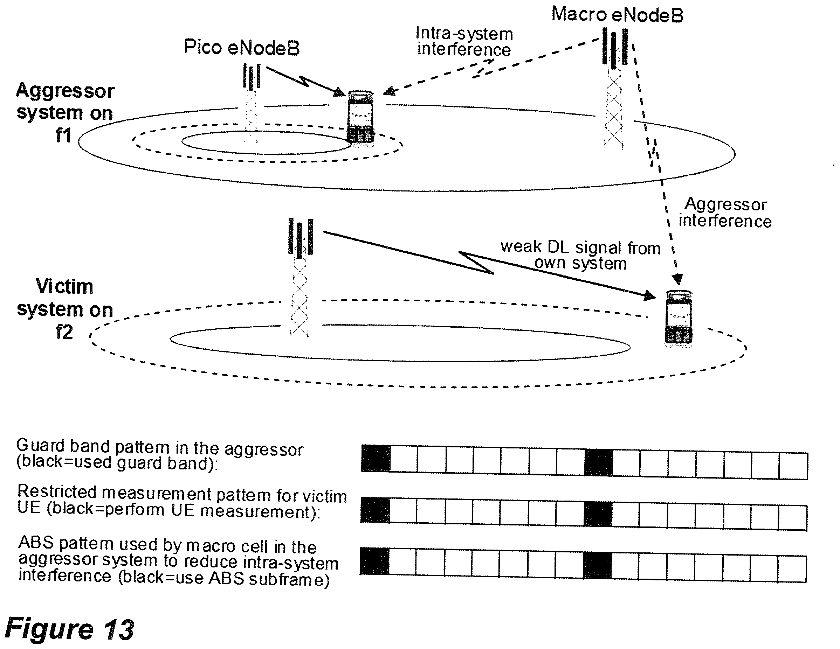

According to fourth embodiments, a pattern-based guard band may be used to enable low-interference conditions for measurements, channel reception, and/or scheduling occasions on the entire or at least a portion of a victim bandwidth at specific time occasions, for all or a subset of radio nodes or UEs. An example scenario is illustrated in Figure 13 (which is an example of co-existence enabled Enhanced Inter-Cell Interference Coordination or eICIC). The example of Figure 13 is for DL, but embodiments of the invention are not limited to DL co-existence and DL patterns. Note that although 3 patterns are shown in Figure 13, configuring the restricted measurement pattern and/or ABS pattern may be unused in some embodiments. Furthermore, at least some of the 3 patterns may be different. In this example, and the pattern-based guard bands may be an efficient way to allow improved/better performance for cell-edge UEs suffering from high interference. These UEs may perform measurements or receive DL transmissions when pattern-based guard bands are indicated/used. At the same time, scheduling of center UEs with better interference conditions may be prioritized when pattern-based guard bands are not indicated and/or not used.

This configuration may be resource-efficient (e.g., when only some transmitted/received signals need protection and/or when the aggressor cell radio resources are scarce and are needed to serve high-load traffic in the aggressor system). A wireless device (e.g., a UE) can be requested to perform measurement on victim system and/or receive data from a victim system during low interference measurement occasions. These measurement/scheduling occasions can fully overlap with or can be a subset of the low interference occasions in aggressor system, meaning that a restricted pattern for measurement/scheduling may need to be indicated to the wireless device. Such restricted measurement patterns may be the same or different from restricted measurement patterns used for intra-system communication.

In some embodiments, a restricted measurement pattern (DL or UL) may be configured in a victim system in response and/or adaptively to a guard band pattern in the aggressor system, or in another embodiment a guard band pattern may be adaptively configured in response to one or more measurement patterns used in the victim system. The two patterns may or may not use the same time units (e.g., subframes or radio frames or a fixed-time unit for a guard band pattern), and the two patterns may or may not be the same or exactly the same. In one example, however, the two patterns fully overlap (no more resources are wasted/not used for transmissions in the aggressor system than needed and no more resources demanding low-interference conditions are allocated in the victim UE).

In some other embodiments, restricted measurement patterns for co-existence scenarios may be adapted to overlap with intra-system restricted measurement patterns used for the standardized eICIC and FeICIC (Frequency enhanced Inter-Cell Interference Coordination). The adaptation may be performed (e.g., according to a rule or a requirement) by a third node, autonomously by a victim node, or by a victim system in general, using a coordinating node. The overlap may be a full overlap or a partial overlap, e.g., at least X% or in X subframes out of Y, etc. The overlap may also be specified in terms of a subset or a superset (e.g., the intra-band measurement pattern may be a subset/superset of the measurement pattern for co-existence.

In still other embodiments, transmit patterns (e.g., with ABS or almost blank subframes which are a type of low power and/or low activity time periods) which may be used for intra-band inter-cell interference coordination, are adaptively configured to account for pattern-based guard bands, or the other way around (i.e., pattern-based guard bands are adaptively configured to account for ABS). The pattern-based guard bands may thus be interpreted as inter-system ABS enabling co-existence of two or more systems. The adaptation may be performed (e.g., according to a rule or a requirement) by the victim or aggressor system, or by a third node. The adaptation may include controlling an overlap between low power/activity time periods and pattern-based guard bands. For example, the overlap between pattern-based guard bands and low power/activity patterns may be increased/maximized, to efficiently use aggressor system resources if the aggressor system uses ABS for intra-band eICIC.

Compared to statically configured guard bands, pattern-based guard bands may reduce a number of measurement occasions with preferred interference conditions which may impact the measurement accuracy and/or measurement period and/or performance target and/or measurement configuration (e.g., a large bandwidth may only be configured in time occasions protected by the pattern-based guard bands).

The pattern based guard bands to enable low-interference measurement and/or scheduling occasions may in particular be very useful for low cost devices such as those used for MTC (Machine Type Communications) or M2M (Machine to Machine) communication or for D2D (Device to Device) communication. For these devices, the occasional data reception/transmission and infrequent measurement sampling are still beneficial. This is because they may have generally very low data reception/transmission activity and can also afford to have lower measurement performance, e.g., longer measurement period due to guard band patterns.

Pattern-based guard bands may also be beneficial with D2D communications where devices are also capable of operating in different systems, for example, to enhance UE-to-UE co-existence, or to improve, for example, neighbor device detection.

### Fifth Embodiments

### Relation to Requirements and Testing (Embodiments relating to requirements and testing may also use, fully or partially, embodiments described in other sections and/or elements thereof.)

Requirements may be set depending on the pattern-based guard band configuration or to test the nodes' ability to configure a pattern-based guard band. A victim UE or a network node may adapt its behavior (e.g., transmissions and/or measurements) so that a requirement is met, where the requirement may be an RF requirement such as out-of-band emission requirement, an RRM (Radio Resource Management) requirement such as an accuracy or measurement period requirement (a measurement following the pattern-based guard band may require longer time), or a UE performance requirement such as CSI (Channel State Information) or demodulation requirement. An aggressor UE or node may need to adapt its behavior, for example, for transmissions and retransmissions scheduling, transmit activity patterns, UE scheduling, measurement configuration (e.g., for two-way measurements such as RTT or Rx-Tx, DTX, etc.), etc.

A test equipment (TE) or a test system (TS) (e.g., a system simulator (SS), emulator, test nodes, etc.) may configure pattern-based guard band patterns that mimic pattern-based guard bands, and may implement, at least in part, any one or more of Embodiments 1, 2, 3, or 4 discussed above.

The TE or TS may implement the signaling protocol, pre-defined rules, and/or pre-defined requirements associated with the pattern based guard band described in preceding sections.

The TE or TS may configure the device under test (DUT) (e.g., a UE or a base station) with the test procedure associated with the pattern based guard band. The TE or TS may receive measurement results, data, and/or signaling messages from the DUT as part of the test procedures. The TE or TS may interpret results or feedback information from DUT and compare with the pre-defined results or behavior. As a consequence, the TE or TS can determine whether the DUT is capable of implementing procedures, signaling protocols, pre-defined behavior, pre-defined requirements, etc. associated with the pattern based guard band described in preceding sections.

A test equipment (TE) or a test system (TS) (e.g., a system simulator or SS, an emulator, test nodes, etc.) may also configure pattern-based OCNG (Orthogonal Frequency Division Multiplexing or OFDM Channel Noise Generator) patterns that mimic generation of interference similar to that by the pattern-based guard bands. In prior systems, the OCNG patterns may be used to model allocations to virtual UEs (which are not under test) in LTE. The OCNG patterns generate noise to model interference for the UE which is under test. The generated noise is Orthogonal Frequency-Division Multiple Access (OFDMA) based signal. In prior systems, OCNG patterns may be used to generate noise in contiguous units of resources in frequency domain and the remaining contiguous unit may be used for allocation to the UE (e.g. Physical Downlink Shared Channel (PDSCH) transmission for configuration, reference measurement channel, etc). The OCNG patterns may be implemented in test equipment (e.g., a system simulator or emulator) and also in a real network node (e.g., an eNodeB) which is used for the testing of the UE or relay or similar devices.

The TE or TS may require a control unit, a processing until and a memory unit to perform different types of tests or verification or generation of noise by virtue of pattern based OCNG patterns described above.

### Abbreviations

- 3GPP: 3^{rd} Generation Partnership Project
- BS: Base Station
- CRS: Cell-specific Reference Signal
- DUT: Device under test
- eICIC: enhanced ICIC
- eNodeB: evolved Node B
- ICIC: Inter-Cell Interference Coordination
- LTE: Long-Term Evolution
- OCNG: OFDM Channel Noise Generator
- PCI: Physical Cell Identity
- RAT: Radio Access Technology
- RRC: Radio Resource Control
- SINR: Signal-to-Interference Ratio
- UE: User Equipment
- UMTS: Universal Mobile Telecommunications System

### Further Definitions and Embodiments

In the above-description of various embodiments of the present invention, it is to be understood that the terminology used herein is for the purpose of describing particular embodiments only and is not intended to be limiting of the invention. Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement functions/acts specified in the block diagrams and/or flowchart block or blocks, and thereby create means, functionality, and/or structure to implement functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/BlueRay).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps to implement the functions/acts specified in the block diagrams and/or flowchart block or blocks. Accordingly, embodiments of the present invention may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of the invention. Moreover, although some of the diagrams include arrows on communication paths to show a primary direction of communication, it is to be understood that communication may occur in the opposite direction to the depicted arrows.

Many different embodiments have been disclosed herein, in connection with the above description and the drawings. It will be understood that it would be unduly repetitious and obfuscating to literally describe and illustrate every combination and subcombination of these embodiments. Accordingly, the present specification, including the drawings, shall be construed to constitute a complete written description of various example combinations and subcombinations of embodiments and of the manner and process of making and using them, and shall support claims to any such combination or subcombination.

Many variations and modifications can be made to the embodiments without substantially departing from the principles of the present invention. All such variations and modifications are intended to be included herein within the scope of the present invention. Accordingly, the above disclosed subject matter is to be considered illustrative, and not restrictive.

## Claims

1. A method in a first node (511) for handling a pattern-based guard band (600), the first node (511) being comprised in a wireless communications network (500), the method comprising:
*configuring* (703) the pattern-based guard band (600), the pattern-based guard band (600) comprising a pattern, the pattern comprising at least a first set of time resources (630) and a second set of time resources (640), wherein the first set of time resources (630) is associated with a first guard band configuration (610) and the second set of time resources (640) is associated with one of: no guard band configuration and a second guard band configuration (620), wherein the second guard band configuration (620) is different from the first guard band configuration (610),
applying the configured pattern-based guard band by the first node or signaling the configured pattern-based guard band to a second network node.

2. The method of claim 1, wherein the pattern is adaptively configured based on at least one of: time- and/or frequency-varying aggressor interference from an aggressor system, amount of impact on a victim system of different transmissions in the aggressor system, time- and/or frequency-varying victim signal receptions in the victim system, and sensitivity to the aggressor interference of different victim signal receptions in the victim system.

3. The method of claim 1 or 2, wherein the pattern is associated with at least one of: a DownLink, DL, or UpLink, UL, transmission, a duplex configuration in aggressor or victim, a UL-DL Time Division Duplex configuration, a transmit activity pattern in an aggressor or a victim, a receive pattern in a victim, and a specific signal of a victim or an aggressor.

4. The method of any of claims 1-3, wherein the pattern further comprises information on at least one of: pattern length, frequency information of an aggressor, multi-level pattern sequence, time unit and granularity of pattern sequence, pattern repetition type, periodicity or repetition period, reference time point from where a sequence is calculated or derived, starting time point from when the pattern applies, ending time point until which the pattern applies, duration of pattern, modification time, starting condition, ending condition, modification condition, transmit power level in aggressor system, direction of applicability of guard band pattern, and location information where guard band pattern is applied.

5. The method of any of claims 1-4, wherein the configuring is based on information regarding a capability of supporting guard band patterns of at least one of: the second node (512) and a third node (513) in the wireless communications network (500).

6. The method of any of claims 1-5, wherein the configuring is performed at least one of: periodically, on a request from another node (512, 513), upon being triggered by an event, triggered by a condition, and upon expiry of a timer and after certain time duration.

7. The method of any of claims 1-6, further comprising *receiving* (701) a request from at least one of the second node (512) and a third node (513) in the wireless communications network (500) to configure one or more guard band patterns.

8. The method of any of claims 1-7 further comprising *receiving* (702) information from at least one of the second node (512) and a third node (513) in the wireless communications network (500), the information enabling the configuring of the pattern-based guard band (600).

9. The method of any of claims 1-8, further comprising *configuring* (706) one of the second node (512) and a third node (513) to adapt at least one of its transmission and its reception to the configured pattern-based guard band (600).

10. A first node (511) for handling a pattern-based guard band (600), the first node (511) being adapted to be comprised in a wireless communications network (500), the first node (511) comprising:
a configuring (1001) circuit configured to configure the pattern-based guard band (600), the pattern-based guard band (600) comprising a pattern, the pattern comprising at least a first set of time resources (630) and a second set of time resources (640), wherein the first set of time resources (630) is associated with a first guard band configuration (610) and the second set of time resources (640) is associated with one of: no guard band configuration and a second guard band configuration (620), wherein the second guard band configuration (620) is different from the first guard band configuration (610),
the first node further being configured to apply the configured pattern-based guard band or
to signal the configured pattern-based guard band (600) to a second node (512) adapted to be comprised in the wireless communication network (500).

## Patentansprüche

1. Verfahren in einem ersten Knoten (511) zur Handhabung eines musterbasierten Sicherheitsbandes (600), wobei der erste Knoten (511) in einem drahtlosen Kommunikationsnetz (500) enthalten ist, wobei das Verfahren umfasst:
Konfigurieren (703) des musterbasierten Sicherheitsbandes (600), wobei das musterbasierte Sicherheitsband (600) ein Muster umfasst, das Muster mindestens einen ersten Satz von Zeitressourcen (630) und einen zweiten Satz von Zeitressourcen (640) umfasst, wobei der erste Satz von Zeitressourcen (630) mit einer ersten Sicherheitsbandkonfiguration (610) assoziiert ist, und der zweite Satz von Zeitressourcen (640) entweder mit keiner Sicherheitsbandkonfiguration oder einer zweiten Sicherheitsbandkonfiguration (620) assoziiert ist, wobei die zweite Sicherheitsbandkonfiguration (620) von der ersten Sicherheitsbandkonfiguration (610) verschieden ist,
Anwenden des konfigurierten musterbasierten Sicherheitsbandes durch den ersten Knoten oder Signalisieren des konfigurierten musterbasierten Sicherheitsbandes an einen zweiten Netzknoten.

2. Verfahren nach Anspruch 1, wobei das Muster basierend auf mindestens einem von zeit- und/oder frequenzveränderlicher Angreiferstörung von einem Angreifersystem, Ausmaß der Wirkung auf ein Opfersystem von verschiedenen Übertragungen im Angreifersystem, zeit- und/oder frequenzveränderlichen Opfersignalempfängen im Opfersystem und Empfindlichkeit gegenüber Angreiferstörung von verschiedenen Opfersignalempfängen im Opfersystem adaptiv konfiguriert wird.

3. Verfahren nach einem der Ansprüche 1 oder 2, wobei das Muster mit mindestens einem von einer Downlink, DL,- oder Uplink, UL,-Übertragung, einer Duplexkonfiguration im Angreifer oder Opfer, einer UL-DL-Zeitduplexkonfiguration, einem Sendeaktivitätsmuster in einem Angreifer oder einem Opfer, einem Empfangsmuster in einem Opfer und einem spezifischen Signal eines Opfers oder eines Angreifers assoziiert ist.

4. Verfahren nach einem der Ansprüche 1 - 3, wobei das Muster ferner Informationen über mindestens eines umfasst von Musterlänge, Frequenzinformationen eines Angreifers, mehrstufiger Musterfolge, Zeiteinheit und Granularität der Musterfolge, Musterwiederholungstyp, Periodizität oder Wiederholungsperiode, Bezugszeitpunkt, ab dem eine Folge berechnet oder abgeleitet wird, Startzeitpunkt, ab dem das Muster gilt, Endzeitpunkt, bis zu dem das Muster gilt, Musterdauer, Modifikationszeit, Startbedingung, Endbedingung, Modifikationsbedingung, Sendeleistungsegel im Angreifersystem, Anwendbarkeitsrichtung von Sicherheitsbandmuster und Standortinformationen, wo das Sicherheitsbandmuster angewendet wird.

5. Verfahren nach einem der Ansprüche 1 - 4, wobei das Konfigurieren auf Informationen bezüglich einer Fähigkeit zum Unterstützen von Sicherheitsbandmustern mindestens eines von dem zweiten Knoten (512) und einem dritten Knoten (513) im drahtlosen Kommunikationsnetz (500) basiert.

6. Verfahren nach einem der Ansprüche 1 - 5, wobei das Konfigurieren mindestens periodisch, auf Anforderung von einem anderen Knoten (512, 513), bei Auslösung durch ein Ereignis, ausgelöst durch eine Bedingung oder bei Ablauf eines Zeitgebers und nach einer bestimmten Zeitdauer durchgeführt wird.

7. Verfahren nach einem der Ansprüche 1 - 6, ferner umfassend ein Empfangen (701) einer Anforderung von mindestens einem des zweiten Knotens (512) und eines dritten Knotens (513) im drahtlosen Kommunikationsnetz (500) zum Konfigurieren eines oder mehrerer Sicherheitsbandmuster.

8. Verfahren nach einem der Ansprüche 1 - 7, umfassend ein Empfangen (702) von Informationen von mindestens einem des zweiten Knotens (512) und eines dritten Knotens (513) im drahtlosen Kommunikationsnetz (500), wobei die Informationen das Konfigurieren des musterbasierten Sicherheitsbandes (600) ermöglichen.

9. Verfahren nach einem der Ansprüche 1 - 8, ferner umfassend ein Konfigurieren (706) eines von dem zweiten Knoten (512) und einem dritten Knoten (513), um mindestens eines von seinem Senden oder seinem Empfangen an das konfigurierte musterbasierte Sicherheitsband (600) anzupassen.

10. Erster Knoten (511) zum Handhaben eines musterbasierten Sicherheitsbandes (600), wobei der erste Knoten (511) ausgelegt ist, um in einem drahtlosen Kommunikationsnetz (500) enthalten zu sein, wobei der erste Knoten (511) umfasst:
eine Konfigurationsschaltung (1001), die so konfiguriert ist, dass sie das musterbasierte Sicherheitsband (600) konfiguriert, wobei das musterbasierte Sicherheitsband (600) ein Muster umfasst, das Muster mindestens einen ersten Satz von Zeitressourcen (630) und einen zweiten Satz von Zeitressourcen (640) umfasst, wobei der erste Satz von Zeitressourcen (630) mit einer ersten Sicherheitsbandkonfiguration (610) assoziiert ist, und der zweite Satz von Zeitressourcen (640) entweder mit keiner Sicherheitsbandkonfiguration oder einer zweiten Sicherheitsbandkonfiguration (620) assoziiert ist, wobei die zweite Sicherheitsbandkonfiguration (620) von der ersten Sicherheitsbandkonfiguration (610) verschieden ist,
der erste Knoten ferner so konfiguriert ist, dass er das konfigurierte musterbasierte Sicherheitsband anwendet oder
das konfigurierte musterbasierte Sicherheitsband (600) an einen zweiten Knoten (512) signalisiert, der ausgelegt ist, um im drahtlosen Kommunikationsnetz (500) enthalten zu sein.

## Revendications

1. Procédé dans un premier noeud (511) pour gérer une bande de garde à base de motif (600), le premier noeud (511) étant compris dans un réseau de communication sans fil (500), le procédé comprenant :
la configuration (703) de la bande de garde à base de motif (600), la bande de garde à base de motif (600) comprenant un motif, le motif comprenant au moins un premier ensemble de ressources de temps (630) et un deuxième ensemble de ressources de temps (640), dans lequel le premier ensemble de ressources de temps (630) est associé à une première configuration de bande de garde (610) et le deuxième ensemble de ressources de temps (640) est associé à l'une de : aucune configuration de bande de garde et une deuxième configuration de bande de garde (620), dans lequel la deuxième configuration de bande de garde (620) est différente de la première configuration de bande de garde (610),
l'application de la bande de garde à base de motif configurée par le premier noeud ou la signalisation de la bande de garde à base de motif configurée à un deuxième noeud de réseau.

2. Procédé selon la revendication 1, dans lequel le motif est configuré de manière adaptative sur la base d'au moins l'un de : une interférence d'agresseur variant dans le temps et/ou en fréquence provenant d'un système d'agresseur, une quantité d'impact sur un système de victime de différentes transmissions dans le système d'agresseur, des réceptions de signal de victime variant dans le temps et/ou en fréquence dans le système de victime, et une sensibilité à l'interférence d'agresseur de différentes réceptions de signal de victime dans le système de victime.

3. Procédé selon la revendication 1 ou 2, dans lequel le motif est associé à au moins l'une de : une transmission de liaison descendante, DL, ou de liaison montante, UL, une configuration duplex dans l'agresseur ou la victime, une configuration duplex par répartition dans le temps UL-DL, un motif d'activité de transmission dans un agresseur ou une victime, un motif de réception dans une victime, et un signal spécifique d'une victime ou d'un agresseur.

4. Procédé selon l'une quelconque des revendications 1 - 3, dans lequel le motif comprend en outre des informations relatives à au moins l'un de : une longueur de motif, des informations de fréquence d'un agresseur, une séquence de motif multiniveau, une unité de temps et une granularité de séquence de motif, un type de répétition de motif, une périodicité ou une période de répétition, un point dans le temps de référence à partir duquel une séquence est calculée ou dérivée, un point dans le temps de début à partir duquel le motif s'applique, un point dans le temps de fin jusqu'auquel le motif s'applique, une durée de motif, un temps de modification, une condition de début, une condition de fin, une condition de modification, un niveau de puissance de transmission dans le système d'agresseur, un sens d'applicabilité du motif de bande de garde et des informations d'emplacement auquel le motif de bande de garde est appliqué.

5. Procédé selon l'une quelconque des revendications 1 - 4, dans lequel la configuration est basée sur des informations relatives à une capacité de prise en charge de motifs de bande de garde d'au moins l'un de : le deuxième noeud (512) et un troisième noeud (513) dans le réseau de communication sans fil (500).

6. Procédé selon l'une quelconque des revendications 1 - 5, dans lequel l'exécution de la configuration est au moins l'une de : périodique, à une demande d'un autre noeud (512, 513), à un déclenchement par un événement, déclenchée par une condition, à l'expiration d'une minuterie et après une certaine durée.

7. Procédé selon l'une quelconque des revendications 1 - 6, comprenant en outre la réception (701) d'une demande en provenance d'au moins l'un du deuxième noeud (512) et d'un troisième noeud (513) dans le réseau de communication sans fil (500) pour configurer un ou plusieurs motifs de bande de garde.

8. Procédé selon l'une quelconque des revendications 1 - 7, comprenant en outre la réception (702) d'informations en provenance d'au moins l'un du deuxième noeud (512) et d'un troisième noeud (513) dans le réseau de communication sans fil (500), les informations permettant la configuration de la bande de garde à base de motif (600).

9. Procédé selon l'une quelconque des revendications 1 - 8, comprenant en outre la configuration (706) de l'un du deuxième noeud (512) et d'un troisième noeud (513) pour adapter au moins l'une de sa transmission et de sa réception à la bande de garde à base de motif (600) configurée.

10. Premier noeud (511) pour gérer une bande de garde à base de motif (600), le premier noeud (511) étant apte à être compris dans un réseau de communication sans fil (500), le premier noeud (511) comprenant :
un circuit de configuration (1001) configuré pour effectuer la configuration de la bande de garde à base de motif (600), la bande de garde à base de motif (600) comprenant un motif, le motif comprenant au moins un premier ensemble de ressources de temps (630) et un deuxième ensemble de ressources de temps (640), dans lequel le premier ensemble de ressources de temps (630) est associé à une première configuration de bande de garde (610) et le deuxième ensemble de ressources de temps (640) est associé à l'une de : aucune configuration de bande de garde et une deuxième configuration de bande de garde (620), dans lequel la deuxième configuration de bande de garde (620) est différente de la première configuration de bande de garde (610),
le premier noeud étant en outre configuré pour effectuer l'application de la bande de garde à base de motif configurée ou
la signalisation de la bande de garde à base de motif (600) configurée à un deuxième noeud (512) apte à être compris dans le réseau de communication sans fil (500).
